(19) Europäisches Patentamt
European Patent Office
Office européen des brevets

(11) **EP 1 944 331 A1**

(12) **EUROPEAN PATENT APPLICATION**
published in accordance with Art. 153(4) EPC

(43) Date of publication:
**16.07.2008 Bulletin 2008/29**

(21) Application number: **06811339.8**

(22) Date of filing: **29.09.2006**

(51) Int Cl.:
***C08J 5/18*** (2006.01) ***C08K 5/103*** (2006.01)
***C08K 5/524*** (2006.01) ***C08K 5/527*** (2006.01)
***C08L 23/08*** (2006.01) ***C08L 45/00*** (2006.01)

(86) International application number:
**PCT/JP2006/320012**

(87) International publication number:
**WO 2007/043448 (19.04.2007 Gazette 2007/16)**

(84) Designated Contracting States:
**AT BE BG CH CY CZ DE DK EE ES FI FR GB GR HU IE IS IT LI LT LU LV MC NL PL PT RO SE SI SK TR**

(30) Priority:
**05.10.2005 JP 2005292294**
**05.10.2005 JP 2005292295**
**27.10.2005 JP 2005312536**
**10.03.2006 JP 2006065536**
**15.03.2006 JP 2006070515**

(71) Applicant: **Teijin Chemicals, Ltd.**
**Chiyoda-ku**
**Tokyo 100-0013 (JP)**

(72) Inventors:
- **NITTA, Hideaki**
**Chiyoda-ku, Tokyo 100-0013 (JP)**
- **MURAKAMI, Masahiro**
**Chiyoda-ku, Tokyo 100-0013 (JP)**
- **KATOH, Hironobu**
**Chiyoda-ku, Tokyo 100-0013 (JP)**
- **HASEGAWA, Kinji**
**Chiyoda-ku, Tokyo 100-0013 (JP)**

(74) Representative: **Albrecht, Thomas et al**
**Kraus & Weisert**
**Patent- und Rechtsanwälte**
**Thomas-Wimmer-Ring 15**
**80539 München (DE)**

# (54) MELT-EXTRUDED FILM AND STRETCHED FILM

(57) A melt-extrusion film formed by melt-extruding a resin composition containing (A) a specific amorphous polyolefin typified by an ethylene/norbornene copolymer and (B) a specific phosphite ester or aliphatic ester, wherein the number of gels having a size of 20 μm or larger and existing in the film is 100 pieces/g or less.

Fig. 1

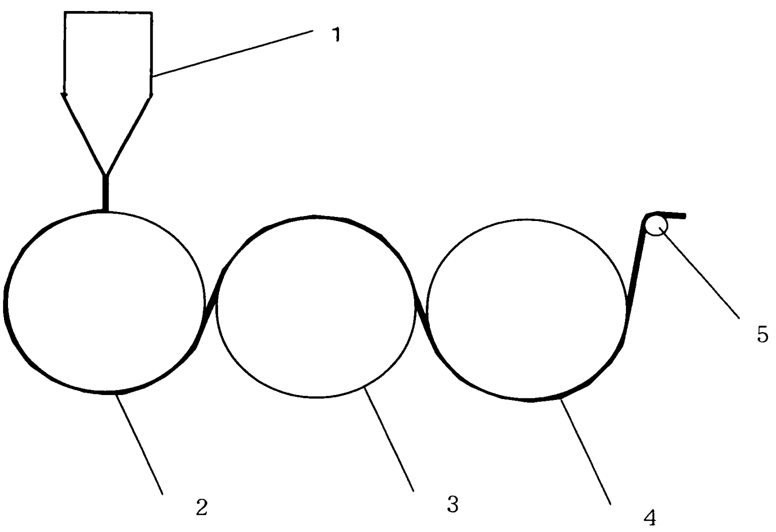


EP 1 944 331 A1

## Description

Technical Field

This invention relates to a film formed by melt-extruding a specific amorphous polyolefin resin composition. The melt-extrusion film of this invention has fewer gels therein and is excellent in surface nature and homogeneity. A stretched film obtained by orientation-stretching the above melt-extrusion film is suitably used as an optical film.

Background Art

Liquid crystal displays are recently making rapid progress and finding their ways not only into small size and medium size displays for cellular phones and personal computers but also remarkably into large size displays for TV sets. Liquid crystal displays use various optical films for improving the definition level thereof. It is amorphous polyolefins or resins called APO that have in recent years attracted attention as materials therefor. The "amorphous polyolefins" refers to polyolefins that are improved in heat resistance and rendered amorphous by incorporating an alicyclic structure. Having high transparency and low water absorption, they are characteristically excellent in dimensional stability. Further, containing no aromatic component, they characteristically have remarkably low photoelastic constants, and these characteristic features are particularly suitable for use thereof in large size liquid crystal displays.

For the production of the above optical film, conventionally, a solution casting method using a solvent has been mainly used, while a melt-extrusion method is actively studied from the viewpoint of a cost, productivity, and the like.

The amorphous polyolefins can be largely classified into two groups in terms of their structures. One group includes ring-opening polymerization type amorphous polyolefins obtained by carrying out ring-opening polymerization of cycloolefins such as a norbornene derivative, etc., and then hydrogenating double bonds of a formed main chain. For example, resins supplied by ZEON CORPORATION in the trade names of ZEONEX and ZEONOR, a resin supplied by JSR Corporation, in the trade name of ARTON, and the like have been already commercially available. The other group includes vinyl polymerization type amorphous polyolefins obtained by vinyl type polymerization of a cycloolefin and ethylene, and as commercially available resins, for example, there are a resin supplied by Mitsui Chemicals, Inc., in a trade name of APEL, a resin supplied by TICONA in the trade name of TOPAS, and the like.

With regard to the ring-opening polymerization type amorphous polyolefins of these, various studies have been made on the formation of films by a melt-extrusion method and optical films obtained by stretching formed films (see Japanese Patent No. 3407714, Japanese Patent No. 3470567 and JP2003-131036A). However, almost no studies have been made with regard to the vinyl polymerization type amorphous polyolefins.

However, the ring-opening type amorphous polyolefins require two steps for the production thereof, the step of ring-opening polymerization of a cycloolefin and the subsequent step of hydrogenating double bonds, so that they have a problem on their production cost.

On the other hand, the vinyl polymerization type amorphous polyolefins can be produced by one step that is the step of vinyl polymerization of a cycloolefin and ethylene, and they are advantageous from the viewpoint of a cost, so that it is strongly desired to use the vinyl polymerization type amorphous polyolefins or stretched films thereof in various fields including the field of optical use.

One reason why vinyl polymerization type amorphous polyolefins have not been much studied hitherto for optical films is that these resins easily undergo gelling when formed into films by a melt-extrusion method as compared with the ring-opening type amorphous polyolefins, so that it is difficult to obtain films that are homogeneous and have excellent surface nature. In the melt-extrusion method, generally, a pelletized resin is melt-kneaded in an extruder and extruded. However, the vinyl polymerization type amorphous polyolefins are liable to undergo gelling due to crosslinking of the resins when a shear force is exerted during such an operation. In particular, this tendency is intense in a single-screw extruder that is generally industrially used, and as a result, an orange peel surface, a fisheye, nonuniformity, a foreign matter and defects on a film surface are liable to be caused. Such films can be applied to general-use films or sheets for packaging or the like, while it has been difficult in many cases to use them in the field of precision optics.

Generally, the melt-extrusion method is liable to cause problems such as the roughening, die streaks, homogeneity decrease and coloring of/on a film surface, and the like due to the thermal deterioration, scorching and gelling of a resin caused by high temperatures. Since amorphous polyolefins are structurally poor in thermal stability as compared with polycarbonate and the like, the above problems are big problems that need to be overcome, and studies have been hitherto made in various ways. For example, JP2002-113767A proposes a method in which the average residence time period up to the outlet of a mold after a resin passes through a filter is defined to suppress the generation and growth of a gel-like substance. Further, JP2003-311813A proposes a method in which the shear speed of a screw in melt-kneading and the form of the screw are devised. However, even these methods do not produce any sufficient effect on the vinyl polymerization type amorphous polyolefins.

For improving film properties, it is general practice to add various additives such as an antioxidant, a lubricant,

a plasticizer, a surfactant, an ultraviolet absorbent, an antistatic agent, etc. In recent years, a stabilizer having a phosphite structure and a phenol structure in the molecule thereof has been proposed (JP10-273494), and there have been proposed its use in a ring-opening type amorphous polyolefin (JP2001-261943) and its use in a hydride of a styrene-based polymer (JP2004-83813A). It has been reported that the above stabilizer does not cause much fuming and is excellent in the suppression of coloring of a molded article. However, nothing has been studied with regard to the inhibition of gelling during the melt-extrusion molding.

When a film is formed from a vinyl polymerization type amorphous polyolefin by the melt-extrusion method, nothing has been known with regard to what measures to take in order to obtain a melt-extrusion film the gelling of which is sufficiently inhibited and which has excellent surface nature.

Meanwhile, liquid crystal displays use, as one of various optical films, a retardation film for the color compensation of a liquid crystal, the widening of a viewing angle, an improvement in contrast, and the like.

However, almost nothing has been studied for applying a vinyl polymerization type amorphous polyolefin to the retardation film. In the past, there were reported a few examples in which films improved in strength were obtained by preparing thicker sheets and biaxially stretching them (Japanese Patent No. 2615957, Japanese Patent No. 3082768 and JP7-2953A). However, there are almost no findings from which their optical properties as retardation films can be known. Only Japanese Patent No. 3082768 reports in-plane birefringence values of biaxially stretched films thereof. As an example in which a vinyl polymerization type amorphous polyolefin is applied to a retardation film, just about one example is reported in which a sheet formed of a copolymer from ethylene and tetracyclododecene is stretched to impart it with birefringence and the thus-obtained film is used as a retardation film (Japanese Patent No. 3497894). However, optical properties of this film as a retardation film are not sufficient, and nothing has been hitherto studied in detail concerning what structure it is that a film should have as being suitable as a retardation film.

When an amorphous polyolefin is used for a retardation film, the development of retardation, i.e., how birefringence should be developed constitutes an important point. That is because almost all amorphous polyolefins have the properties of having very low photoelastic constants and not so easily developing birefringence as aromatic condensation type polymers such as polycarbonate, and the like. When a resin that does not easily develop birefringence is used, it is required to produce a film having a considerably large thickness for obtaining a retardation film having an intended retardation value, and such a film is no more suitable as a member in recent liquid crystal displays that are required to have a small thickness and a light weight. It is desired to realize a vinyl polymerization type amorphous polyolefin film capable of developing birefringence at a practical level as a retardation film by stretching and suitable for a retardation film. However, nothing is known concerning what structure it is that a suitable film should have.

There is not yet known any retardation film that is obtained from a vinyl polymerization type amorphous polyolefin as a raw material and that can be formed by a melt-extrusion method and exhibits sufficient optical properties.

## Disclosure of the Invention

This invention has been made in view of the above circumstances, and the object thereof is to provide a melt-extrusion film that is obtained by a melt-extrusion method using, as a raw material, a vinyl polymerization type amorphous polyolefin advantageous from the viewpoint of a cost and that has fewer gels and has excellent surface nature, and a stretched film thereof.

According to this invention, first, the above object of this invention can be achieved by a melt-extrusion film formed by melt-extruding a resin composition containing (A) 100 parts by weight of an amorphous polyolefin having an ethylene unit of the following formula (a1) and a cycloolefin unit of the following formula (a2) and having a glass transition temperature in the range of 100 to 180°C, and (B) 0.005 to 2 parts by weight of at least one member of the following components (B1) to (B6), the content of 0.005 to 2 parts by weight being a total content of the components (B1) to (B6) contained,

wherein the number of gels having a size of 20 μm or larger in the film is 100 pieces/g or less,

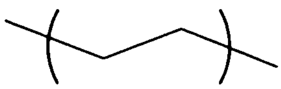

(a1)

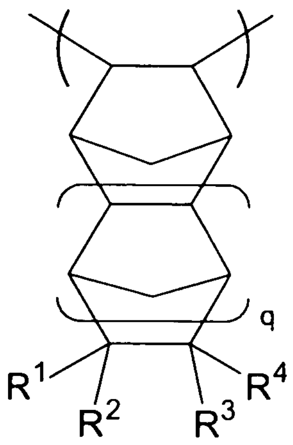

( a2 )

wherein q is an integer of 0 to 4, each of $R^1$, $R^2$, $R^3$ and $R^4$ is independently a hydrogen atom, a halogen atom, an aliphatic hydrocarbon group having 1 to 10 carbon atoms or an aromatic hydrocarbon group having 6 to 10 carbon atoms, $R^1$ and $R^2$ may be bonded to each other, or $R^3$ and $R^4$ may be bonded to each other, to form an alkylidene group, $R^1$ and $R^3$ may be combined with carbons to which they are bonded, or $R^2$ and $R^4$ may be combined with carbons to which they are bonded, to form a ring and said ring may have a double bond,

(B1) a compound of the following formula (I),

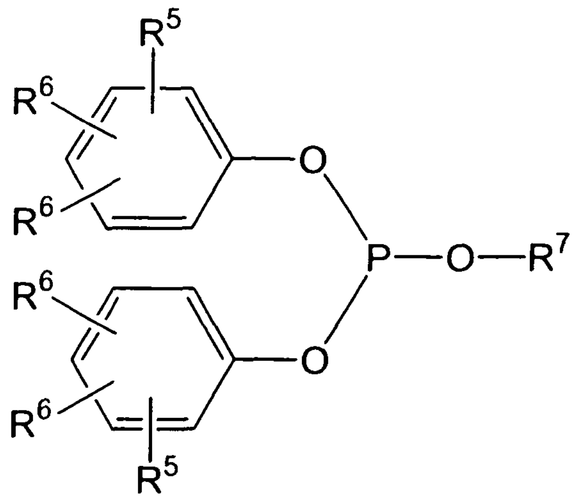

( I )

wherein each of a plurality of $R^5$s and $R^6$s is independently a hydrogen atom, an aliphatic hydrocarbon group having 1 to 12 carbon atoms or an aromatic hydrocarbon group having 6 to 12 carbon atoms and $R^7$ is an aliphatic hydrocarbon group having 1 to 12 carbon atoms or a group of the following formula (1),

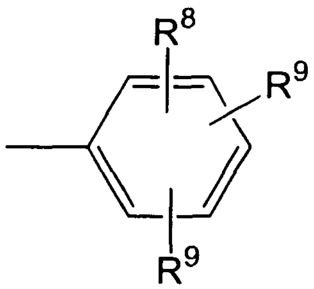

( 1 )

wherein each of $R^8$ and a plurality of $R^9$s is independently a hydrogen atom, an aliphatic hydrocarbon group having 1 to 12 carbon atoms or an aromatic hydrocarbon group having 6 to 12 carbon atoms,
(B2) a compound of the following formula (II),

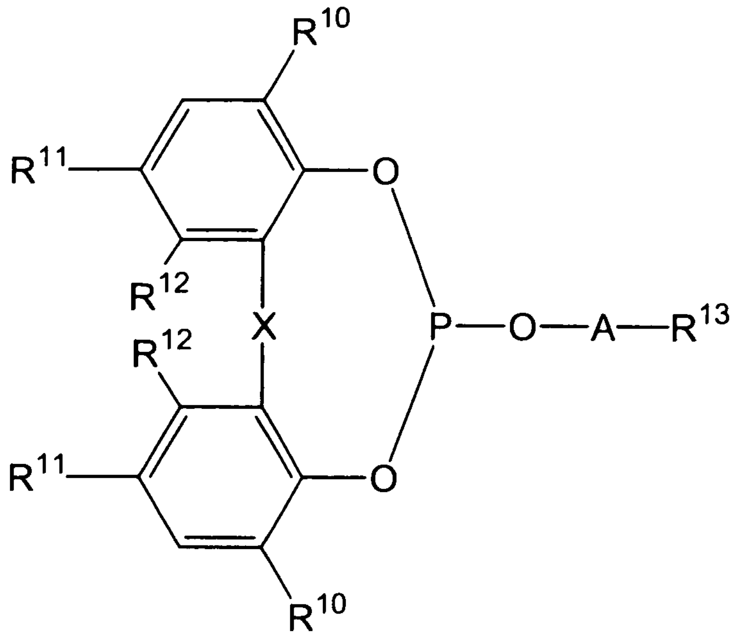

( II )

wherein each of a plurality of $R^{10}$s and $R^{11}$s is independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, each of a plurality of $R^{12}$s is independently a hydrogen atom or an alkyl group having 1 to 8 carbon atoms, X is a single bond, a sulfur atom or a group of -CHR$^{14}$- in which $R^{14}$ is a hydrogen atom, an alkyl group having 1 to 8 carbon atoms or a cycloalkyl group having 5 to 8 carbon atoms, A is a single bond, an alkylene group having 2 to 8 carbon atoms or a group of *-COR$^{15}$- in which $R^{15}$ is a single bond, a methylene group or an alkylene group having 2 to 8 carbon atoms and * represents a bonding to an oxygen side, $R^{13}$ is an aliphatic hydrocarbon group having 1 to 12 carbon atoms or a group of the following formula (2),

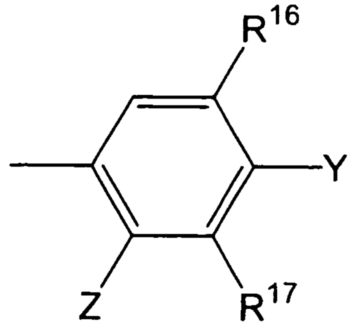

( 2 )

wherein each of $R^{16}$ and $R^{17}$ is independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, one of Y and Z is a hydroxyl group, an alkoxy group having 1 to 8 carbon atoms or an aralkyloxy group having 7 to 12 carbon atoms and the other of Y and Z is a hydrogen atom or an alkyl group having 1 to 8 carbon atoms,
(B3) a partially esterified product or wholly esterified product from a monohydric or polyhydric alcohol having 1 to 20 carbon atoms and a fatty acid having 10 to 30 carbon atoms,
(B4) a fatty acid having 10 to 30 carbon atoms,
(B5) a monohydric or polyhydric aliphatic alcohol having 10 to 30 carbon atoms, and
(B6) a compound of the following formula (III),

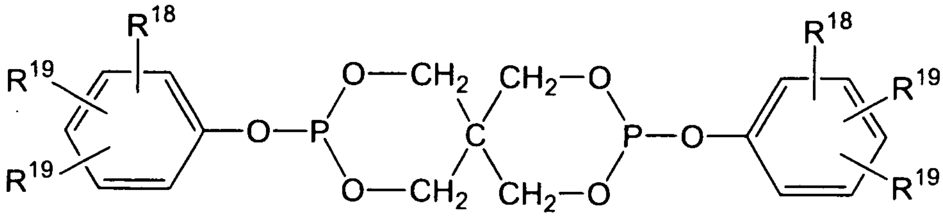

( III )

wherein each of a plurality of $R^{18}$s and $R^{19}$s is independently a hydrogen atom, an aliphatic hydrocarbon group having 1 to 12 carbon atoms or an aromatic hydrocarbon group having 6 to 12 carbon atoms.

According to this invention, secondly, the above object of this invention can be achieved by a melt-extrusion film containing (A) 100 parts by weight of an amorphous polyolefin having an ethylene unit of the foregoing formula (a1) and a cycloolefin unit of the foregoing formula (a2) and having a glass transition temperature in the range of 100 to 180°C, and (B') 0.005 to 2 parts by weight of at least one member of the following components (B1') to (B6'), the content of 0.005 to 2 parts by weight being a total content of the components (B1') to (B6') contained,
wherein the number of gels having a size of 20 μm or larger in the film is 100 pieces/g or less,

(B1') at least one selected from a compound of the foregoing formula (I) and an oxidation product thereof,
(B2') at least one selected from a compound of the foregoing formula (II) and an oxidation product thereof,
(B3') at least one selected from a partially esterified product or wholly esterified product from a monohydric or polyhydric alcohol having 1 to 20 carbon atoms and a fatty acid having 10 to 30 carbon atoms, and a hydrolysis product thereof,
(B4') a fatty acid having 10 to 30 carbon atoms,
(B5') a monohydric or polyhydric aliphatic alcohol having 10 to 30 carbon atoms, and
(B6') at least one selected from a compound of the foregoing formula (III) and an oxidation product thereof.

According to this invention, thirdly, the above object of this invention is achieved by a stretched film obtained by orientation-stretching the above melt-extrusion film. This stretched film can be suitably used as a retardation film when the (a2) cycloolefin unit of the (A) amorphous polyolefin is a norbornene unit and when the abundance ratio of meso forms and racemo forms in two-unit chain portions (dyads) in the (A) amorphous polyolefin is [meso form]/[racemo form]>4.

Brief Explanation of Drawings

Fig. 1 is a schematic drawing showing a melt-extrusion method employed in Example 51.

Explanation of symbols

1: T-die
2: First cooling roll
3: Second cooling roll
4: Third cooling roll
5: Take-off roll

Preferred Embodiments of the Invention

(A) Amorphous polyolefin

The resin composition as a raw material for the melt-extrusion film of this invention contains (A) an amorphous polyolefin having an ethylene unit of the following formula (a1) and a cycloolefin unit of the following formula (a2) and having a glass transition temperature in the range of 100 to 180°C.

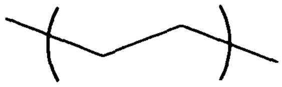

( a1 )

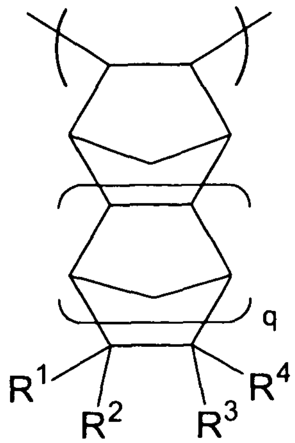

( a2 )

In the formula (a2), q is an integer of 0 to 4, each of $R^1$, $R^2$, $R^3$ and $R^4$ is independently a hydrogen atom, a halogen atom, an aliphatic hydrocarbon group having 1 to 10 carbon atoms or an aromatic hydrocarbon group having 6 to 10 carbon atoms, $R^1$ and $R^2$ may be bonded to each other, or $R^3$ and $R^4$ may be bonded to each other, to form an alkylidene group, $R^1$ and $R^3$ may be combined with carbons to which they are bonded, or $R^2$ and $R^4$ may be combined with carbons to which they are bonded, to form a ring, and said ring may have a double bond.

In the formula (a2), q is preferably 0 or 1, and preferably, $R^1$ to $R^4$ are hydrogen atoms or a combination of $R^1$ and $R^3$ or a combination of $R^2$ and $R^4$ forms an alicyclic ring together with carbon atoms to which they are bonded. This amorphous polyolefin can be produced by vinyl type copolymerization of ethylene and a cycloolefin of the following formula (a2').

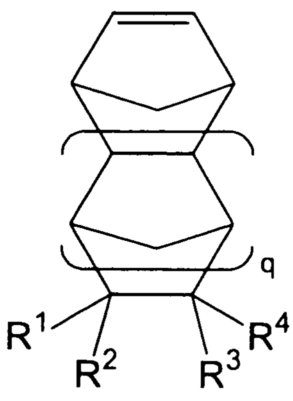

( a2' )

In the formula (a2'), q, $R^1$, $R^2$, $R^3$ and $R^4$ are as defined in the above formula (a2). Specific examples of the (a2') cycloolefin for forming the (a2) cycloolefin unit include 2-norbornene, tetracyclo[4.4.0.$1^{2,5}$.$1^{7,10}$]-3-dodecene, tricycle [4.3.0.$1^{2,5}$]-3-decene, tricycle[4.4.0.$1^{2,5}$]-3-undecene, pentacyclo[6.5.$1^{3,6}$.$0^{2,7}$.$0^{9,12}$]-4-pentadecene, etc. Of these, it is more preferred to use 2-norbornene or tetracyclo[4.4.0.$1^{2,5}$.$1^{7,10}$]-3-dodecene, and 2-norbornene is still more preferred. These cycloolefins may be used singly or in combination of two or more of them.

In this invention, further, the above (A) amorphous polyolefin has a glass transition temperature (Tg) in the range of 100°C to 180°C. When Tg is lower than 100°C, undesirably, a melt-extrusion film obtained is poor in stability

against heat. When Tg is higher than 180°C, undesirably, the tenacity of a melt-extrusion film obtained tends to decrease, and the melt-viscosity of the resin is too high to form a film. The above glass transition temperature is more preferably in the range of 120°C to 160°C. The glass transition temperature of the vinyl polymerization type copolymer correlates with both the structure and composition of the cycloolefin, so that the preferred composition of the recurring unit (a1) and (a2) differs depending upon the cycloolefin used, while the composition of (a1)/(a2) by molar ratio is preferably in the range of 75/25 to 35/65. For example, when the formula (a2) represents a norbornene unit, the molar ratio of (a1)/(a2) is preferably in the range of 61/39 to 40/60, more preferably in the range of 57/43 to 46/54. The composition of the recurring units can be determined, for example, by $^{13}$C-NMR measurement.

The (A) amorphous polyolefin for use in this invention may contain a small amount of a recurring unit derived from other copolymerizable vinyl monomer besides the above ethylene and cycloolefin units so long as the object of this invention is not impaired. Specific examples of the "other" vinyl monomer above include a cycloolefin of the following formula (a3);

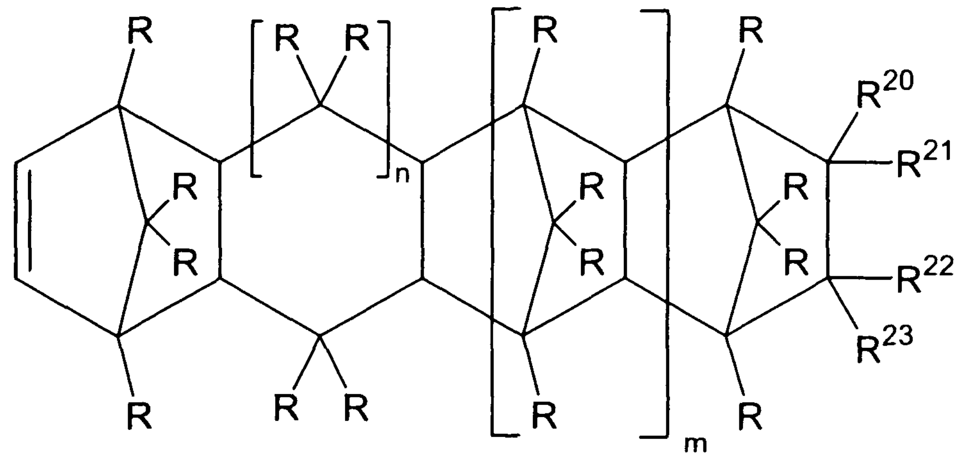

(a3)

wherein n is 0 or 1, m is an integer of 0 to 4, each of R's and $R^{20}$ to $R^{23}$ is independently a hydrogen atom, a halogen atom, a saturated aliphatic hydrocarbon group having 1 to 12 carbon atoms or an unsaturated aliphatic hydrocarbon group having 1 to 12 carbon atoms, $R^{20}$ and $R^{21}$ may be bonded to each other, or $R^{22}$ and $R^{23}$ may be bonded to each other, to form an alkylidene group, $R^{20}$ and $R^{21}$ may be combined with carbon atoms to which they are bonded, or $R^{22}$ and $R^{23}$ may be combined with carbon atoms to which they are bonded, to form a ring, and this ring may have a double bond,

$\alpha$-olefins having 3 to 18 carbon atoms such as propylene, 1-butene, 1-hexene, 4-methyl-1-pentene, 1-octene, 1-decene, 1-dodecene, 1-tetradecene, 1-hexadecene, 1-octadecene, and the like; and cycloolefins such as cyclobutene, cyclopentene, cyclohexene, 3-methylcyclohexene, cyclooctene, and the like. Of these, $\alpha$-olefins having 3 to 18 carbon atoms can be used as a molecular weight adjusting agent for the copolymerization, and above all, 1-hexene is suitably used.

The (A) amorphous polyolefin may have only one kind of a recurring unit, or two or more kinds of recurring units, derived from the above "other" vinyl monomers. In the (A) amorphous polyolefin, the content of the recurring unit derived from the other vinyl monomers is preferably 10 mol% or less, more preferably 5 mol% or less, based on the total content of the ethylene unit, the cycloolefin unit and the recurring unit derived from the other vinyl monomers.

In this invention, one kind of an (A) amorphous polyolefin alone may be used, or a blend of two or more kinds of (A) amorphous polyolefins different in composition and molecular weight may be used. When a blend of (A) amorphous polyolefins is used, the above preferred composition and molecular weight are values that are applied to the entire blend. When the above blend is used, it is preferred to use polyolefins having copolymer compositions close to each other from the viewpoint of compatibility. When the compositions are too far from each other, undesirably, a phase separation may be caused when the polyolefins are blended, or thereafter, a film may be whitened when the film is orientation-stretched.

For the use of a polymer film as a retardation film, generally, the capability of developing birefringence by orientation-stretching the film is required to be high. In the melt-extrusion film of this invention, as the bulkiness of the cycloolefin unit increases, the birefringence tends to be less easily developed. From that viewpoint, a tetracyclododecene unit that is a cycloolefin unit of the above formula (a2) in which q is 1 and all of $R^1$ to $R^4$ are hydrogen atoms is not so preferred as a norbornene unit that is a cycloolefin unit of the above formula (a2) in which q is 0 and all of $R^1$ to $R^4$ are hydrogen atoms. The (A) amorphous polyolefin for use in this invention is preferably an ethylene-norbornene copolymer that is an amorphous polyolefin in which all of cycloolefin units thereof are norbornene units.

In the ethylene-norbornene copolymer, generally, portions in which norbornene units are bonded forming a chain are present to some extent regardless of a copolymer composition, a polymerization, a catalyst used or the like. With regard to the stereoregularity of chain portions of 2 norbornene units (to be referred to as "NN dyad" hereinafter) of a vinyl polymerization type, it is known that there are two types such as a meso form and a racemo form as represented by the following formulae.

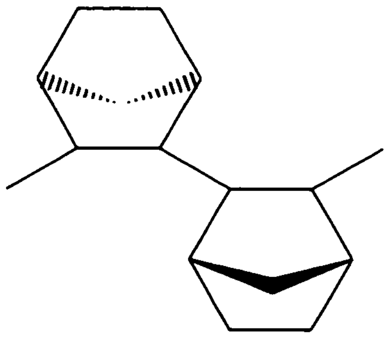

a meso form

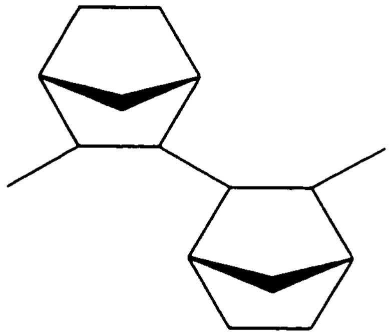

a racemo form

When the melt-extrusion film of this invention is stretched and the stretched film is used as a retardation film, the abundance ratio of meso forms and racemo forms in the above stereoregularity is preferably [meso form]/[racemo form]>4. More preferably, it is [meso form]/[racemo form]>6. With an increase in the above ratio, the capability of developing birefringence by orientation-stretching increases, so that the increase in the above ratio is preferred. There is no special limitation to be imposed on the upper limit thereof. The abundance ratio of NN dyad stereoisomers as used herein can be determined by $^{13}$C-NMR according to a report on the analysis of stereoregularity of an ethylene-norbornene copolymer (Macromol. Rapid Commun. 20, 279 (1999)). The abundance ratio of meso form and racemo form as used in the present specification refers to a value represented by the following expression when the $^{13}$C-NMR measurement is made using a orthodichlorobenzene-$d_4$ solvent.

[Meso form]/[Racemo form] = [peak area at 28.3 ppm of $^{13}$C-NMR spectrum]/[peak area at 29.7 ppm of $^{13}$C-NMR spectrum]

With a decrease in this ratio, that is, with an increase in the proportion of racemo forms, the resin becomes poorer in the capability of developing birefringence. When an attempt is made to stretch such a resin film and use the stretched film as a retardation film, the stretched film may not develop any desired birefringence, or even if a desired birefringence can be obtained, there are required the steps of increasing a film thickness, increasing the stretch ratio, carrying out the stretching at a decreased stretching temperature, etc., and such steps are disadvantageous from the viewpoint of a demand for a decrease in film thickness and productivity.

By the $^{13}$C-NMR analysis, it is also made possible to determine the abundance ratio (molar fraction) of NN dyads to a total norbornene unit amount, that is, the extent to which norbornene units form a chain structure. When the melt-extrusion film of this invention is stretched and used as a retardation film, the abundance ratio (molar fraction) of NN dyads is preferably in the range of 0.1 to 0.6. The molar fraction as used herein refers to a value represented by the following equation when $^{13}$C-NMR measurement is made using a orthodichlorobenzene-$d_4$ solvent.

Abundance ratio (molar fraction) of NN dyads = [peak area at 28.3 ppm of $^{13}$C-NMR spectrum + peak area at 29.7 ppm of $^{13}$C-NMR spectrum]/[peak area corresponding to one carbon atom of total norbornene units]

The molecular weight of the (A) amorphous polyolefin for use in this invention, as a reduced viscosity $\eta_{sp}/c$ measured in a solution of 1.2 g/dL thereof in cyclohexane at 30°C, is preferably in the range of 0.1 to 10 dL/g, more preferably 0.3 to 3 dL/g. When the reduced viscosity $\eta_{sp}/c$ is smaller than 0.1, undesirably, a film may be sometimes brittle. When this value is larger than 10, undesirably, the melt viscosity may be too high and it may be sometimes difficult to carry out melt-extrusion to form a film.

The method of synthesizing the ethylene-norbornene copolymer that is desirably used for the melt-extrusion film of this invention is not specially limited so long as it has a glass transition temperature in the above range and has a molecular weight, represented by a reduced viscosity, an abundance ratio of NN dyads and stereoregularity that satisfy the above preferred ranges.

However, it is known that the steric structure of an ethylene-norbornene copolymer differs greatly depending upon a catalyst used for its copolymerization. For example, when the copolymerization is carried out in the presence of a Ziegler-Natta catalyst typified by a combination of a vanadium compound with an organic aluminum compound, it is difficult to control the composition and steric structure thereof due to its polymerization mechanism, and there is formed a random copolymer and poor in stereoregularity. On the other hand, it is known that when a metallocene catalyst consisting of metallocene that is a metal complex of titanium, zirconium or the like and a promoter such as MAO (methylaluminoxane) or the like is used, various controls are permitted by taking advantage of the metallocene catalyst that is uniform in active site. Actually, it is confirmed that copolymers obtained differ in stereoregularity depending upon a difference in ligands of metallocene used in the copolymerization for the ethylene-norbornene copolymers (see Macromol. Rapid Commun. 20, 279 (1999)).

From the above point of view, the method of synthesizing the ethylene-norbornene copolymer that is preferably used for the melt-extrusion film of the present invention is preferably carried out according to a method using a metallocene catalyst.

Metallocene is represented by the following formula (C).

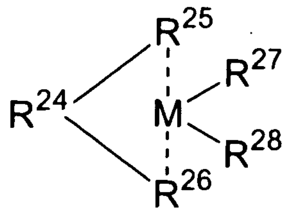 (C)

In the formula (C), M is titanium, zirconium or hafnium, $R^{27}$ and $R^{28}$ are the same as, or different from, each other and each is a hydrogen atom, a halogen atom, a saturated hydrocarbon group having 1 to 12 carbon atoms, an unsaturated hydrocarbon group having 1 to 12 carbon atoms, an alkoxy group having 1 to 12 carbon atoms or an aryloxy group having 6 to 12 carbon atoms, $R^{25}$ and $R^{26}$ are the same as, or different from each other, and each is a monocyclic hydrocarbon group or a polycyclic hydrocarbon group capable of forming a sandwich structure together with a central metal M, and $R^{24}$ is a bridge connecting the group $R^{25}$ and the group $R^{26}$ and is selected from a class of groups of the following formulae.

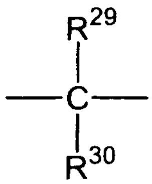 , 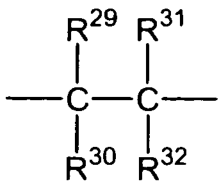 , 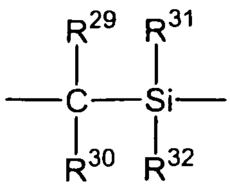 , 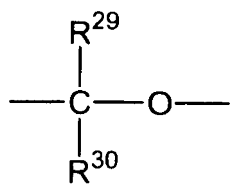 ,

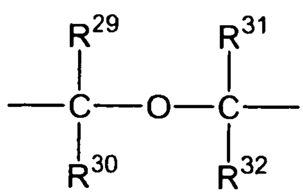 , 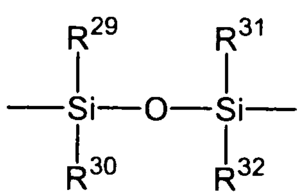 , 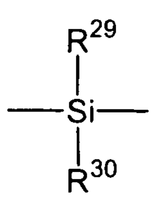 ,

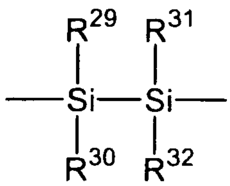 , 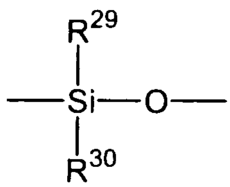 , 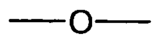 , 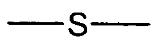 ,

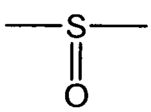 , 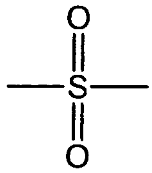

In the above class of groups, each of $R^{29}$ to $R^{32}$ is the same as, or different from, every other one or some others and each is a hydrogen atom, a halogen atom, a saturated hydrocarbon group having 1 to 12 carbon atoms, an unsaturated hydrocarbon group having 1 to 12 carbon atoms, an alkoxy group having 1 to 12 carbon atoms or an aryloxy group having 6 to 12 carbon atoms, or $R^{29}$ and $R^{30}$ may be bonded, or $R^{31}$ and $R^{32}$ may be bonded, to each other forming a ring.

Each of the above $R^{25}$ and $R^{26}$ is preferably cyclopentadienyl, indenyl or one of these groups on which an alkyl group or an aryl group is substituted, and the central metal M is most preferably zirconium from the viewpoint of catalytic activity. $R^{27}$ and $R^{28}$ may be the same as, or different from, each other, and each is preferably an alkyl group having 1 to 6 carbon atoms or a halogen atom, particularly preferably a chlorine atom. $R^{29}$ to $R^{32}$ are preferably a hydrogen atom, an alkyl group having 1 to 6 carbon atoms or phenyl each, and examples of substituents represented by $R^{24}$ preferably include a lower alkylene group such as methylene, ethylene, propylene, etc.; an alkylidene group such as isopropylidene, etc.; a substituted alkylene group such as diphenylmethylene, etc.; a silylene group; and a substituted silylene group such as dimethylsilylene, diphenylsilylene, etc. When $R^{25}$ and $R^{26}$ are the same, the metallocene is preferably a rac configuration having a $C_2$ symmetry with regard to the central metal M.

Specific examples of the metallocene preferably include isopropylidene-(cyclopentadienyl)(1-indenyl)zirconium dichloride, isopropylidene-[(3-methyl)cyclopentadienyl] (1-indenyl)zirconium dichloride, dimethylsilylene-(cyclopentadienyl) (1-indenyl)zirconium dichloride, rac-dimethylsilylene-bis(1-indenyl)zirconium dichloride, rac-diphenylsilylene-bis (1-indenyl)zirconium dichloride, rac-ethylene-bis(1-indenyl)zirconium dichloride,
rac-isopropylidene-bis(1-indenyl)zirconium dichloride, and the like. These may be used singly or in combination of two or more of these.

The promoter for the metallocene includes known promoters such as methylaluminoxane that is an organic aluminumoxy compound, a combination of an ionic boron compound with an alkylaluminum compound, and the like.

The intended ethylene-norbornene copolymer can be produced in the presence of the above metallocene catalyst by a known polymerization method using a known hydrocarbon solvent such as toluene, xylene, cyclohexane, or the like. The thus-obtained copolymer can be isolated by a method in which it is precipitated in a poor solvent such as an alcohol and washed or by distilling off the solvent after the catalyst is separated from a copolymerization solution. For separating the catalyst from the copolymerization solution, for example, there can be employed a method in which an adsorbent is caused to adsorb the catalyst, a method in which some additive is added to agglomerate and precipitate the catalyst or some other method.

(B) Component

The resin composition as the raw material for the melt-extrusion film of this invention further contains (B) at least one of the following components (B1) to (B6).

(B1) A compound of the following formula (I),

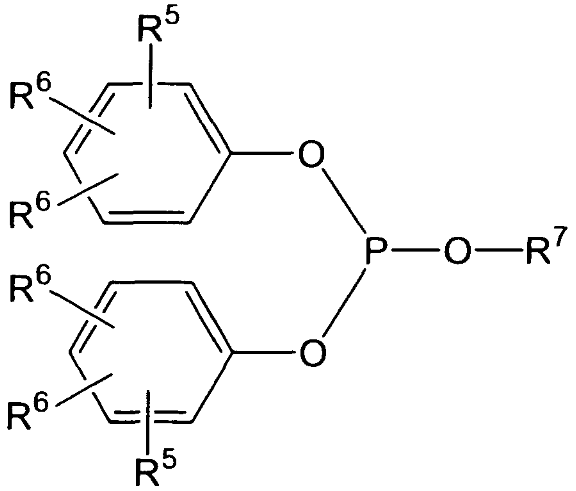

(I)

wherein each of a plurality of $R^5$s and $R^6$s is independently a hydrogen atom, an aliphatic hydrocarbon group having 1 to 12 carbon atoms or an aromatic hydrocarbon group having 6 to 12 carbon atoms, $R^7$ is an aliphatic hydrocarbon group having 1 to 12 carbon atoms or a group of the following formula (1),

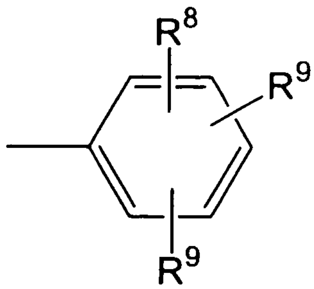

(1)

wherein each of $R^8$ and a plurality of $R^9$s is independently a hydrogen atom, an aliphatic hydrocarbon group having 1 to 12 carbon atoms or an aromatic hydrocarbon group having 6 to 12 carbon atoms.
(B2) A compound of the following formula (II),

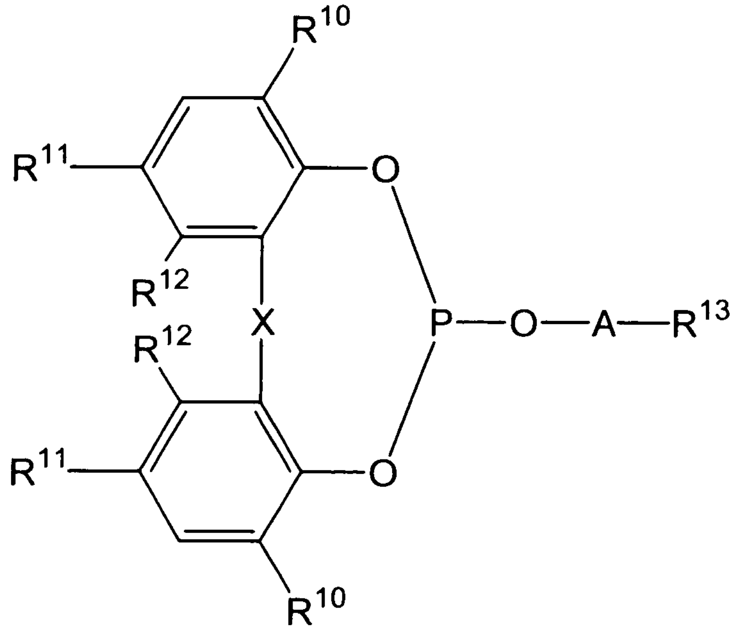

(II)

wherein each of a plurality of $R^{10}$s and $R^{11}$s is independently a hydrogen atom, an alkyl group having 1 to 8 carbon atoms, a cycloalkyl group having 5 to 8 carbon atoms, an alkylcycloalkyl group having 6 to 12carbon atoms, an aralkyl group having 7 to 12 carbon atoms or a phenyl group, each of a plurality of $R^{12}$s is independently a hydrogen atom or an alkyl group having 1 to 8 carbon atoms, X is a single bond, a sulfur atom or a group of -CHR$^{14}$- in which $R^{14}$ is a hydrogen atom, an alkyl group having 1 to 8 carbon atoms or a cycloalkyl group having 5 to 8 carbon atoms, A is a single bond, an alkylene group having 2 to 8 carbon atoms or a group of *-COR$^{15}$- in which $R^{15}$ is a single bond, a methylene group or an alkylene group having 2 to 8 carbon atoms and * represents a bonding to an oxygen side, $R^{13}$ is an aliphatic hydrocarbon group having 1 to 12 carbon atoms or a group of the following formula (2),

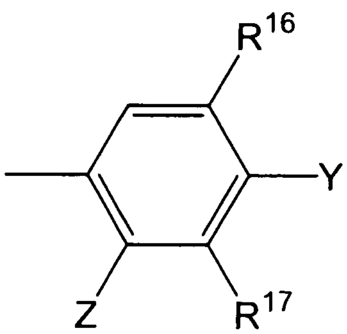

(2)

wherein each of $R^{16}$ and $R^{17}$ is independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, one of Y and Z is a hydroxyl group, an alkoxy group having 1 to 8 carbon atoms or an aralkyloxy group having 7 to 12 carbon atoms and the other of Y and Z is a hydrogen atom or an alkyl group having 1 to 8 carbon atoms.

(B3) A partially esterified product or wholly esterified product from a monohydric or polyhydric alcohol having 1 to 20 carbon atoms and a fatty acid having 10 to 30 carbon atoms.

(B4) A fatty acid having 10 to 30 carbon atoms.

(B5) A monohydric or polyhydric aliphatic alcohol having 10 to 30 carbon atoms.

(B6) A compound of the following formula (III),

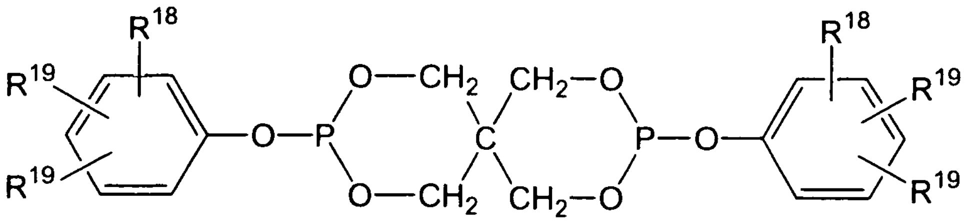

( III )

wherein each of a plurality of $R^{18}$s and $R^{19}$s is independently a hydrogen atom, an aliphatic hydrocarbon group having 1 to 12 carbon atoms or an aromatic hydrocarbon group having 6 to 12 carbon atoms.

Component (B1)

The component (B1) that the resin composition as a raw material for the melt-extrusion film of this invention can contain is a compound of the above formula (I) .

Specific examples of $R^5$ and $R^6$ in the above formula (I) include a hydrogen atom, methyl, ethyl, n-propyl, isopropyl, n-butyl, isobutyl, sec-butyl, tert-butyl, tert-pentyl, cyclohexyl, 1-methylcyclohexyl, isooctyl, tert-octyl, 2-ethylhexyl, n-nonyl, tert-nonyl, 2-phenylpropyl, phenyl, benzyl group and the like. Of these, a hydrogen atom, methyl, ethyl, tert-butyl, tert-pentyl, tert-octyl, n-nonyl and tert-nonyl are preferred, and a hydrogen atom, methyl or tert-butyl group is more preferred. Particularly preferably, $R^5$ is a hydrogen atom or $R^6$ is tert-butyl group. $R^5$ and $R^6$ are preferably positioned on ortho-positions or para-positions on phenyl groups to which they are bonded.

Examples of $R^7$ in the above formula (I) include methyl, ethyl, n-propyl, isopropyl, n-butyl, isobutyl, sec-butyl, tert-butyl, tert-pentyl, 2-ethyl-1-hexyl, isodecyl group; and a group of the above formula (1) in which each of $R^8$ and $R^9$ is a hydrogen atom, methyl, ethyl, n-propyl, isopropyl, n-butyl, isobutyl, sec-butyl, tert-butyl, tert-pentyl, cyclohexyl, 1-methylcyclohexyl, isooctyl, tert-octyl, 2-ethylhexyl, n-nonyl, tert-nonyl, 2-phenylpropyl, phenyl, benzyl group or the like. Of these, preferred as $R^7$ is methyl, ethyl group or a group of the above formula (1) in which each of $R^8$ and $R^9$ is a hydrogen atom, methyl, ethyl, tert-butyl, tert-pentyl, tert-octyl, n-nonyl or tert-nonyl group. More preferred is ethyl group or a group of the above formula (1) in which $R^8$ is a hydrogen atom and $R^9$ is tert-butyl group. In the group of the above formula (1), preferably, $R^8$ and $R^9$ are positioned on ortho-positions or para-positions on phenyl groups to which they are bonded.

Specific examples of the compound of the above formula (I) include bis(2,4-di-tert-butyl-6-methylphenyl)-ethyl phosphite, triphenyl phosphite, tris(2,4-di-tert-butylphenyl) phosphite, tris(2,6-di-tert-butylphenyl) phosphite, tris(2,4-di-tert-butyl-5-methylphenyl) phosphite, tris(monon591onylphenyl) phosphite, tris(dinonylphenyl) phosphite, etc. Of these, tris (2,4-di-tert-butylphneyl) phosphite or tris(2,6-di-tertphenyl) phosphite is preferred, and tris(2,4-di-tert-butylphenyl) phosphite is particularly preferred.

The compound of the above formula (I) is excellent in hydrolysis resistance and stability against heat and moisture and heat resistance, so that it is suitably used. Compounds included in the above formula (I) may be used singly or in combination of two or more of them.

When the resin composition as a raw material for the melt-extrusion film of this invention contains the compound of the above general formula (I), the content thereof per 100 parts by weight of the (A) amorphous polyolefin is preferably 0.01 to 2 parts by weight. When this value is smaller than 0.01 part by weight, the effect thereof on the inhibition of thermal deterioration of the resin and the effect thereof on the inhibition of gelling during melt extrusion are poor, and a film having poor surface nature may be formed. Further, when it is larger than 2 parts by weight, there may be caused problems of a bleeding on a film surface, a rise in haze of a film, the fouling of a roll during melt extrusion, and the like. The content of the compound of the above formula (I) is more preferably 0.01 to 1 part by weight, still more preferably 0.02 to 0.5 part by weight.

Component (B2)

The component (B2) that the resin composition as a raw material for the melt-extrusion film of this invention can contain is a compound of the above formula (II) .

In the above formula (II), $R^{10}$ is preferably a tert-alkyl group, cyclohexyl, 1-methylcyclohexyl, or the like. The tert-alkyl group specifically includes tert-butyl, tert-pentyl, tert-octyl, etc., and tert-butyl is particularly preferred.

$R^{11}$ is preferably an alkyl group having 1 to 5 carbon atoms. The alkyl group specifically includes methyl, ethyl, n-propyl, isopropyl, n-butyl, isobutyl, sec-butyl, tert-butyl, tert-pentyl group and the like, and of these, methyl, tert-butyl or tert-pentyl group is preferred, and tert-butyl group is particularly preferred.

$R^{12}$ is preferably a hydrogen atom or an alkyl group having 1 to 5 carbon atoms, more preferably a hydrogen atom or methyl group, particularly preferably a hydrogen atom.

$R^{13}$ is preferably an alkyl group having 1 to 10 carbon atoms such as methyl, ethyl, n-propyl, isopropyl, n-butyl, isobutyl, sec-butyl, tert-butyl, tert-pentyl, 2-ethyl-1-hexyl, isodecyl group or the like or a group of the above formula (2). It is more preferably an alkyl group having 2 to 8 carbon atoms such as ethyl, 2-ethyl-1-hexyl, isodecyl, or the like, or a group of the above formula (2), particularly preferably 2-ethyl-1-hexyl or a group of the above formula (2). When $R^{13}$ is a group represented by the above formula (2), $R^{16}$ in the formula (2) is preferably a tert-alkyl group, cyclohexyl, 1-methylcyclohexyl group or the like. The above tert-alkyl group specifically includes tert-butyl, tert-pentyl, tert-octyl group and the like, and tert-butyl is particularly preferred. When $R^{13}$ is a group represented by the above formula (2), $R^{17}$ in the formula (2) is preferably a hydrogen atom or an alkyl group having 1 to 5 carbon atoms. The above alkyl group having 1 to 5 carbon atoms specifically includes methyl, ethyl, n-propyl, isopropyl, n-butyl, isobutyl, sec-butyl, tert-butyl, tert-pentyl group and the like. $R^{17}$ is particularly preferably methyl, tert-butyl or tert-pentyl among these, and it is particularly preferably tert-butyl. When $R^{13}$ is a group represented by the above formula (2), preferably, one of Y and Z in the formula (2) is a hydrogen group and the other of Y and Z is a hydrogen atom or an alkyl group having 1 to 5 carbon atoms (such as methyl, ethyl, n-propyl, isopropyl, n-butyl, isobutyl, sec-butyl, tert-butyl, tert-pentyl group or the like), and particularly preferably, Y is hydroxyl and Z is a hydrogen atom.

X is preferably a single bond or a group of - $CHR^{14}$- in which $R^{14}$ is a hydrogen atom, methyl, ethyl, n-propyl, isopropyl or tert-butyl group, and X is particularly preferably a single bond.

A is preferably a single bond, an alkylene group having 2 to 8 carbon atoms or a group of *-$COR^{15}$-. The alkylene group having 2 to 8 carbon atoms includes an ethylene group, a propylene group, a butylene group, a pentamethylene group, a hexamethylene group, an octamethylene group, a 2,2-dimethyl-1,3-propylene group, etc., and a propylene group is particularly preferred. $R^{15}$ of the group of *-$COR^{15}$- is preferably a single bond or an ethylene group. "*" in the group of *-$COR^{15}$-represents a bonding to an oxygen side. When the above $R^{13}$ is a group represented by the above formula (2), A is preferably an alkylene group or a group of *-$COR^{15}$-. When $R^{13}$ is a group other than the group represented by the above formula (2), A is preferably a single bond.

Specific examples of the compound of the above formula (II) include 6-[3-(3-tert-butyl-4-hydroxy-5-methylphenyl)propoxy]-2,4,8,10-tetrakis-tert-butyldibenzo[d,f][1.3.2]dioxaphosphepine, 6-[3-(3,5-di-tert-butyl-4-hydroxyphenyl) propoxy]-2,4,8,10-tetrakis-tert-butylbenzo[d,f][1.3.2] dioxaphosphepine, 2,2'-methylenebis(4,6-di-tert-butylphenyl)-2-ethylhexyl phosphite, etc.

The compound of the above formula (II) is suitably used since it is excellent in hydrolysis resistance, stability against heat and moisture and heat resistance. Compounds included in the above formula (II) may be used singly or in combination of two or more of them.

When the resin composition as a raw material for the melt-extrusion film of this invention contains the compound of the above general formula (II), the content thereof per 100 parts by weight of the (A) amorphous polyolefin is preferably 0.01 to 2 parts by weight. When this value is smaller than 0.01 part by weight, the effect thereof on the inhibition of thermal deterioration of the resin and the effect thereof on the inhibition of gelling of a film during melt extrusion are poor, and a film having poor surface nature may be formed. Further, when it is larger than 2 parts by weight, there may be caused problems of a bleeding on a film surface, a rise in haze of a film, the fouling of a roll during melt extrusion, and the like. The content of the compound of the above formula (II) is more preferably 0.01 to 1 part by weight, still more preferably 0.02 to 0.5 part by weight.

Components (B3), (B4) and (B5)

The component (B3) that the resin composition as a raw material for the melt-extrusion film can contain is a partially esterified or wholly esterified product from a monohydric or polyhydric alcohol having 1 to 20 carbon atoms and a fatty acid having 10 to 30 carbon atoms.

Specific examples of compounds coming under the component (B3) include stearic acid monoglyceride, stearic acid diglyceride, stearic acid triglyceride, stearic acid monosorbitate, behenic acid monoglyceride, palmitic acid monoglyceride, glycerin diacetomonolaurate, pentaerythritol monostearate, pentaerythritol tetrastearate, pentaerythritol tetrapalmitate, pentaerythritol tetrapelargonate, dioctyl sebacate, propylene glycol monostearate, stearyl stearate, palmityl palmitate, octyl palmitate, 2-ethylhexyl palmitate, butyl stearate, methyl laurate, isopropyl palmitate, sorbitan monostearate, 2-ethylhexyl stearate, methyl oleate, etc.

The component (B4) is a fatty acid having 10 to 30 carbon atoms, and examples thereof include fatty acids such as lauric acid, myristic acid, palmitic acid, stearic acid, 12-hydroxystearic acid, oleic acid, sebacic acid, etc.

The component (B5) is a monohydric or polyhydric aliphatic alcohol having 10 to 30 carbon atoms, and examples thereof include stearyl alcohol, myristyl alcohol, lauryl alcohol, palmityl alcohol, 1,10-decanediol, etc.

The component (B3), (B4) or (B5) is generally used as a mold release agent, a plasticizer for a resin or an emulsifier for foods, while the present inventors have found that these compounds work to inhibit a shear force exerted

on a resin during melt extrusion and have an effect on the inhibition of gelling.

When the resin composition as a raw material for the melt-extrusion film of this invention contains the above component (B3), (B4) or (B5), the content thereof, as a total content of (B3), (B4) and (B5), per 100 parts by weight of the (A) amorphous polyolefin is preferably 0.005 to 1 part by weight. This xcontent is more preferably 0.01 to 0.5 part by weight, more preferably 0.02 to 0.3 part by weight. When this content is smaller than 0.005 part by weight, the effect on the inhibition of gelling during melt-extrusion is poor, and a film having poor surface nature may be formed. Further, when it is larger than 1 part by weight, there may be caused problems of a bleeding on a film surface, a rise in haze of a film, a decrease in a discharge amount during melt-extrusion, the fouling of a roll during melt extrusion, and the like. In addition, when the resin composition as a raw material for the melt-extrusion film of this invention contains two or more of the above component (B3), (B4) or (B5), the total content of such members is preferably in the above range.

Component (B6)

The component (B6) that the resin composition as a raw material for the melt-extrusion film can contain is a compound of the above formula (III).

In the above formula (III), each of $R^{18}$s and $R^{19}$s is preferably a hydrogen atom, an alkyl group having 1 to 5 carbon atoms, phenyl or 2-phenyl-2-propyl group. The alkyl group having 1 to 5 carbon atoms includes a hydrogen atom, methyl, ethyl, n-propyl, isopropyl, n-butyl, isobutyl, sec-butyl, tert-butyl, tert-pentyl group and the like. As $R^{18}$s and $R^{19}$s, a hydrogen atom, methyl, tert-butyl or 2-phenyl-2-propyl group of these is more preferred. The compound of the above formula (III) is particularly preferably a compound of the formula (III) in which $R^{18}$ is hydrogen atom or methyl group and $R^{19}$s are tert-butyl or 2-phenyl-2-propyl group. $R^{18}$s and $R^{19}$s are preferably positioned in the ortho-positions or para-positions of phenyl groups to which they are bonded.

Specific examples of the compound of the above formula (III) include cyclic neopentantetraylbis(2,6-di-tert-butyl-4-methylphenyl) phosphite, cyclic neopentantetraylbis(2,4-di-tert-butylphenyl) phosphite, cyclic neopentantetrayl-bis(2,4-di-tert-butyl-6-methylphenyl) phosphite, cyclic neopentantetraylbis[2,4-di-(2-phenyl-2-propyl)phenyl] phosphite, etc.

The compound of the above formula (III) is suitably used since it is excellent in hydrolysis resistance, stability against heat and moisture and heat resistance. Compounds included in the above formula (III) may be used singly or in combination of two or more of them.

When the resin composition as a raw material for the melt-extrusion film of this invention contains the compound of the above formula (III), the content thereof per 100 parts by weight of the (A) amorphous polyolefin is preferably 0.01 to 2 parts by weight. When this value is smaller than 0.01 part by weight, the effect thereof on the inhibition of deterioration of the resin and the effect thereof on the inhibition of gelling during melt-extrusion are poor, and a film having poor surface nature may be formed. Further, when it is larger than 2 parts by weight, there may be caused problems of a bleeding on a film surface, a rise in haze of a film, the fouling of a roll during melt extrusion, and the like. The content of the compound of the above formula (III) is more preferably 0.01 to 1 part by weight, still more preferably 0.02 to 0.5 part by weight.

When the resin composition as a raw material for the melt-extrusion film of this invention contains two or more of the above components (B1), (B2), (B3) to (B5) and (B6), the total content thereof per 100 parts by weight of the (A) amorphous polyolefin is 0.005 to 2 parts by weight. This value is preferably 0.01 to 1 part by weight, more preferably 0.02 to 0.5 part by weight. When they are used in the above content range, the gelling of the melt-extrusion film obtained can be effectively inhibited without causing the problems of a bleeding on a film surface, a rise in haze of the film, the fouling of a roll during melt extrusion, or the like.

Of the above components (B1) to (B6), the resin composition as a raw material for the melt-extrusion film of this invention preferably contains at least one member selected from the components (B1), (B2) and (B3), and more preferably contains both the components (B1) and (B3) or contains both the components (B2) and (B3).

Other components

The resin composition as a raw material for the melt-extrusion film of this invention contains the above (A) amorphous polyolefin and the (B) component as essential components, while it may contain other components depending upon use fields as required so long as the object of this invention is not impaired. Examples of such other components include a phenolic antioxidant, an ultraviolet absorbent, an antistatic agent, etc.

Specific examples of the above phenolic antioxidant include 2,6-di-tert-butyl-4-methylphenol, n-octadecyl-β-(4'-hydroxy-3',5'-di-tert-butylphenyl) propionate, pentaerythritoltetrakis[3-(3,5-di-tert-butyl-4-hydroxyphenyl) propionate], 4,4'-butylidenebis(3-methyl-6-tert-butylphenol), triethylene glycol-N-bis-3-(3-tert-butyl-4-hydroxy-5-methylphenyl) propionate, 1,6-hexanediolbis[3-(3,5-di-tert-butyl-4-hydroxyphenyl) propionate, 3,9-bis{2-[3-(3-tert-butyl-4-hydroxy-5-methylphenyl)propionyloxy]-1,1-dimethylethyl}-2,4,8,10-tetraoxaspiro[5,5]undecane, 2,2'-methylenebis(4-methyl-6-tert-butylphenol), 4,4'-thiobis(3-methyl-6-tert-butylphenol), etc. In the resin composition as a raw material for the melt-extrusion film of this invention, the content of the above phenolic antioxidant, per 100 parts by weight of the (A) amorphous polyolefin, is preferably 1 part by weight or less, more preferably 0.001 to 1 part by weight, still more preferably 0.01 to 0.5 part by weight.

Method for producing resin composition

The resin composition as a raw material for the melt-extrusion film of this invention can be obtained by an appropriate method such as one of the following methods (1) to (4).

(1) A direct kneading method in which the (A) amorphous polyolefin, the (B) component and other optional components are melt-kneaded in an extruder.
(2) A solution mixing method in which the (B) component and other optional components are added to a resin solution that is obtained by producing the (A) amorphous polyolefin by copolymerization and from which a catalyst component is then fully removed, or a solution of pellets or a powder of the (A) amorphous polyolefin in a proper solvent such as cyclohexane, etc., and then the solvents are removed by a means such as a flushing extruder that works to distill off the solvents through a vent hole or a dryer.
(3) A master batch method in which the (B) component and other optional components are mixed by a melt-kneading method using an extruder or the solution mixing method in (2) to prepare a master batch having a high concentration of these components in the (A) amorphous polyolefin and this master batch is blended with the (A) amorphous polyolefin.
(4) A dry blend method in which the (A) amorphous polyolefin, the (B) component and other optional components are directly dry-blended.

Of the above methods, the dry blend method in (4) is effective for inhibiting the gelling and is hence preferred. When the component (B1), (B2) or (B6) is used in combination with the component (B3) as the (B) component, it is preferred to use a method in which the component (B1), (B2) or (B6) is mixed with the (A) amorphous polyolefin by one of the above methods (1) to (3) and then the component (B3) is dry-blended or a method in which the component (B1), (B2) or (B6) is combined with the component (B3) and at the same time dry-blended with the (A) amorphous polyolefin. It is particularly preferred to use the method in which the component (B1), (B2) or (B6) is combined with the component (B3) and at the same time dry-blended with the (A) amorphous polyolefin.

Method for producing melt-extrusion film

As a method for producing the melt-extrusion film of this invention, there is preferably employed a method in which a resin composition prepared in the above manner is melt-kneaded with an extruder, the resin is extruded through a T-die and an extrudate is brought into intimate contact with a cooling drum. In this case, the resin composition is passed through a filter for further inhibiting the gelling. As an extruder, any one of a single-screw extruder and a twin-screw extruder may be used, while a single-screw extruder is preferably used from the viewpoint of the accurate control of a discharge amount and productivity on an industrial scale.

It is known that when a single-screw extruder is used, the gelling tends to take place to a less degree with a decrease in the screw diameter. It is said that the reason therefor is that with an increase in the screw diameter, the plasticization of the resin in the extruder takes a longer time, so that an excess shear stress is liable to be exerted on the resin. When the screw diameter is too small, undesirably, the discharge amount is small, which leads to a poor productivity. From the above viewpoint, it is preferred to use an extruder having a screw diameter in the range of 25 to 200 mm for producing the melt-extrusion film of this invention, and the screw diameter is more preferably 60 to 150 mm. For decreasing the time period for which the resin suffers a shear stress so that it may be as small as possible, it is preferred to increase the number of rotations of the screw as much as possible.

The resin temperature when the melt-extrusion is carried out can be determined as required by taking account of the flowability, thermal stability, etc., of the resin used, while the melt-extrusion in this invention is preferably carried out in the range of 220 to 320°C. When the resin temperature is lower than 220°C, the melt-viscosity of the resin is extremely high. When it exceeds 320°C, the transparency and homogeneity of a film may be impaired due to the thermal deterioration and gelling of the resin. The resin temperature is more preferably in the range of 230°C to 290°C.

The thickness of the melt-extrusion film of this invention is preferably in the range of 10 to 400 μm, more preferably 20 to 300 μm, still more preferably in the range of 30 to 250 μm. When a film obtained by orientation-stretching the melt-extrusion film of this invention is used as a retardation film, the thickness of the extrusion film is determined by taking account of an intended retardation value, thickness, and the like.

The width of the melt-extrusion film of this invention is also determined depending upon its purpose. A larger

width is preferred in view of productivity. In view of limitations from facilities and stability in forming the film, however, the film width is preferably in the range of 300 mm to 2,500 mm, more preferably 300 mm to 2,000 mm.

When the melt-extrusion film of this invention is produced by a melt-extrusion method, preferably, the thickness non-uniformities both in the width direction and the length direction (running direction) are decreased so that they may be as small as possible. That is because when the thickness non-uniformity at this stage is large, an obtained retardation film also has a large non-uniformity in retardation when an oriented film obtained by orientation-stretching the melt-extrusion film of this invention is used as such a retardation film. The thickness non-uniformity based on the thickness is preferably ±5 % or smaller, more preferably ±2 % or smaller.

The melt-extrusion film of this invention may be produced as a roll (film roll) obtained by taking up an approximately 100 to 1,000 m long large-length film in the form of a roll.

In the melt-extrusion for producing the melt-extrusion film of this invention, it is also preferred from the viewpoint of an stability in forming the film to employ a method in which the film is brought into intimate contact with a cooling roll by means of electrostatic adhesion. When a plurality of cooling rolls are used, preferably, the electrostatic adhesion is applied to a first cooling roll (that refers to a cooling roll which a resin composition extruded through a T-die first comes in contact with). The electrostatic adhesion is carried out by the use of a wire, and the method therefor includes a total-width pinning that ensures the adhesion of the entire film surface and an edge pinning that ensures the adhesion of only two edge portions of a film. Any one of these methods can be employed. As a wire for the electrostatic adhesion, a conventionally known metal wire made of SUS is preferably used. The metal wire for the electrostatic adhesion can be extended with a proper tension in a space approximately 4 to 7 mm above and far from the film surface. For the electrostatic adhesion of only the two edge potions, there is a method using a metal wire that is positioned above the film surface and that is covered with an insulating material such as a small tube made of a resin except for the two edge portions thereof, or a method in which needle-like pins for applying a voltage are provided in the edge portions. The setting position of the metal wire and the voltage to be applied can be determined while a film-forming state is observed. The voltage is preferably in the range of several kV to 10 kV.

Melt-extrusion film

In the melt-extrusion film of the invention, which is produced in the above manner, the number of gels having a size of 20 μm or larger in the film is 100 pieces/g or less. The gel as used herein refers to an undissolved substance when a film is dissolved in a cyclohexane solvent. Further, the number of gels having a size of 20 μm or larger refers to a number obtained by dissolving a film in cyclohexane having a weight 8 times the weight of the film at a temperature of 25°C for a sufficient period of time, filtering the cyclohexane solution through a silk screen as a filter, which is a mesh-like cloth having openings of 20 μm, fully washing the filter with cyclohexane and counting undissolved substances remaining on the filter while observing them through a microscope. When the above number of gels is larger than 100 pieces/g, a film is apparently poor in surface nature and homogeneity in many cases, and it is not preferred as an optical film. Such gels emit fluorescent light by applying a black light to them and are hence easily distinguishable from foreign matter externally included during the counting of gel, so that the gels can be counted. The number of gels having a size of 20 μm or larger is preferably 80 pieces/g or less, more preferably 60 pieces/g or less.

In the above procedure, when a silk screen having smaller openings is used as a filter, the number of gels remaining on the filter increases. In the melt-extrusion film of this invention, the number of gels having a size of 5 μm or larger, counted when a silk screen having openings of 5 μm, is preferably 1,000 pieces/g or less, more preferably 500 pieces/g or less, still more preferably 200 pieces/g or less.

The melt-extrusion film of this invention contains the (A) amorphous polyolefin and further contains at least one of the (B) component added to the resin composition that is used as a raw material and a derivative therefrom. That is, the melt-extrusion film of this invention contains (A) an amorphous polyolefin having an ethylene unit of the foregoing formula (a1) and a cycloolefin unit of the foregoing formula (a2) and having a glass transition temperature in the range of 100 to 180°C and (B') at least one of the following components (B1') to (B6').

(B1') at least one selected from a compound of the foregoing formula (I) and an oxidation product thereof,
(B2') at least one selected from a compound of the foregoing formula (II) and an oxidation product thereof,
(B3') at least one selected from a partially esterified product or wholly esterified product from a monohydric or polyhydric alcohol having 1 to 20 carbon atoms and a fatty acid having 10 to 30 carbon atoms and a hydrolysis product thereof,
(B4') a fatty acid having 10 to 30 carbon atoms,
(B5') a monohydric or polyhydric aliphatic alcohol having 10 to 30 carbon atoms, and
(B6') at least one selected from a compound of the foregoing formula (III) and an oxidation product thereof.

Of the above components (B1'), the oxidation product of the compound of the foregoing formula (I) is a compound

of the following formula (I').

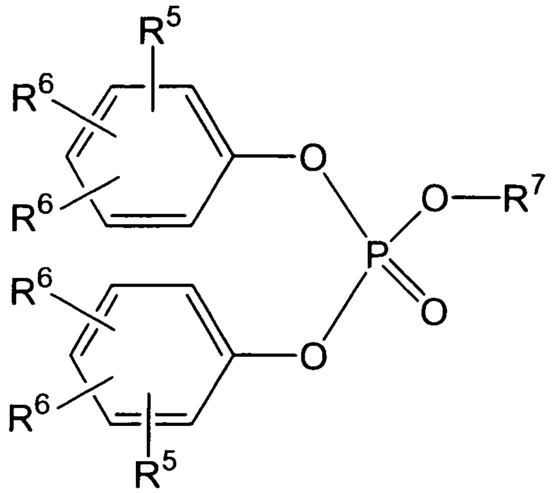

( I' )

wherein $R^5$, $R^6$ and $R^7$ are as defined in the foregoing formula (I).

Of the above components (B2'), the oxidation product of the compound of the foregoing formula (II) is a compound of the following formula (II').

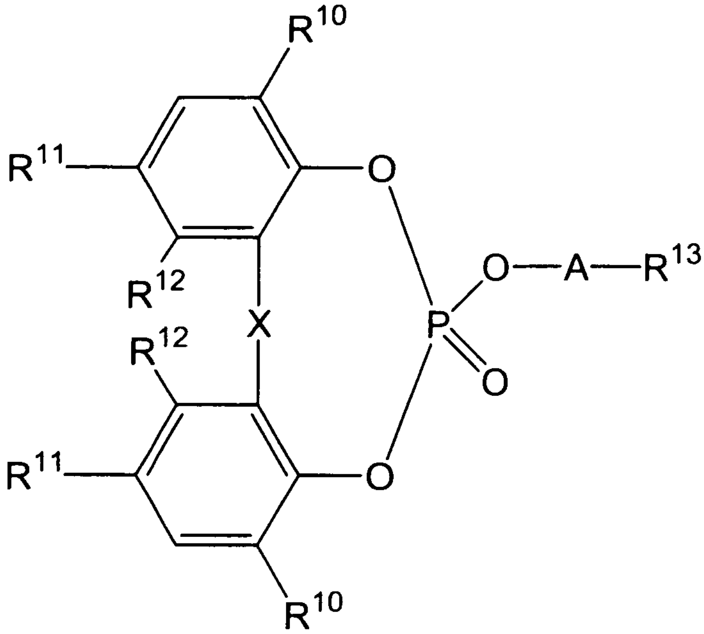

( II' )

wherein $R^{10}$, $R^{11}$, $R^{12}$, $R^{13}$, A and X are as defined in the foregoing formula (II).

Of the above compounds (B6'), the oxidation product of the compound of the foregoing formula (III) is a compound of the following formula (III').

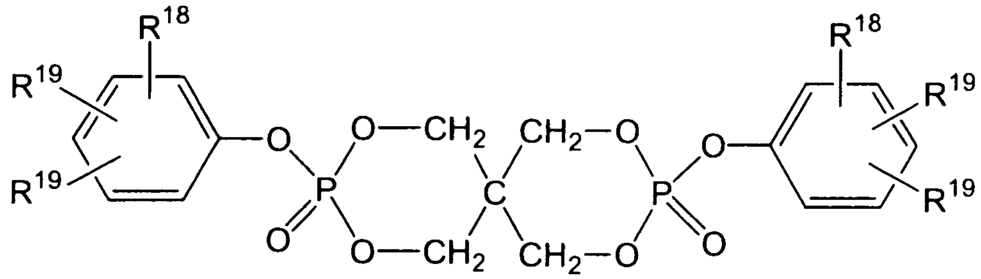

( III' )

wherein $R^{18}$ and $R^{19}$ are as defined in the foregoing formula (III).

The compound of the above formula (I'), (II') or (III') (these compounds will be generically referred to as "phosphoric ester") is an oxide generated as a result of the action that the compound of the foregoing formula (I), (II) or (III) (these compounds will be generically referred to as "phosphite ester") added to the resin composition as a raw material for the melt-extrusion film of this invention has performed as a gelling inhibitor. In the melt-extrusion film of this invention, therefore, the abundance ratio of the phosphoric ester and the phosphite ester is dependent upon melt-extrusion conditions, while [phosphite ester content]/[phosphoric ester content] is preferably 95/5 to 5/95.

Of the above components (B3'), the hydrolysis product of a partially esterified product or wholly esterified product from a monohydric or polyhydric alcohol having 1 to 20 carbon atoms and a fatty acid having 10 to 30 carbon atoms refers to a monohydric or polyhydric alcohol having 1 to 20 carbon atoms and a fatty acid having 10 to 30 carbon atoms.

The content of the above hydrolysis product in the melt-extrusion film (total molar amount of the alcohol and fatty acid) based on a residual esterified product is preferably 50 mol% or less, more preferably 30 mol% or less.

The above component (B4') or (B5') is the component (B4) or (B5) that is added to the resin composition as a raw material for the melt-extrusion film of this invention and remains intact in the melt-extrusion film.

Therefore, when individual compounds are rigorously compared, the molecular weight of the oxidation product or the total molecular weight of the hydrolysis products is slightly larger than the molecular weight of the phosphite ester or the partially esterified product or wholly esterified product of a fatty acid when they are calculated. However, it can be considered that the contents of the components (B1') to (B6') in the melt-extrusion film of this invention are substantially equivalent to the contents of the components (B1) to (B6) in the resin composition used as a raw material for the film. That is, the contents of the components (B1') to (B6') in the melt-extrusion film of this invention per 100 parts by weight of the (A) amorphous polyolefin are as follows.

(B1'): Preferably 0.01 to 2 parts by weight, more preferably 0.01 to 1 part by weight, still more preferably 0.02 to 0.5 part by weight.
(B2'): Preferably 0.01 to 2 parts by weight, more preferably 0.01 to 1 part by weight, still more preferably 0.02 to 0.5 part by weight.
(B3') - (B5'): The total content of (B3'), (B4') and (B5') is preferably 0.005 to 1 part by weight, more preferably 0.01 to 0.5 part by weight, still more preferably 0.02 to 0.3 part by weight.
(B6'): Preferably 0.01 to 2 parts by weight, more preferably 0.01 to 1 part by weight, still more preferably 0.02 to 0.5 part by weight.

Further, when the melt-extrusion film of this invention contains two or more of the above components (B1'), (B2'), (B3') to (B5') and (B6'), the total content thereof per 100 parts by weight of the (A) amorphous polyolefin is 0.005 to 2 parts by weight. This value is preferably 0.01 to 1 part by weight, more preferably 0.02 to 0.5 part by weight.

The melt-extrusion film of this invention contains the above (B') component, that is, at least one of the above (B) component and a derivative derived therefrom. The contents of these components can be quantitatively determined by the NMR analysis or various elemental analyses of the melt-extrusion film such as ICP spectrometry, fluorescence X-ray analysis, etc. Moreover, there may be employed a method in which a melt-extrusion film is dissolved in cyclohexane, then, a resin is re-precipitated in an alcohol poor solvent such as methanol, isopropanol, or the like, a supernatant is concentrated to extract these components and the components are analyzed. For example, a phosphorus-containing compound such as (B1'), (B2') or (B6') can be identified and quantitatively determined by the $^{31}$P-NMR measurement of these extracts.

The melt-extrusion film of this invention constitutes a film having high optical isotropy since the (A) amorphous polyolefin used has a low photoelastic constant, and the film can be suitably used as various optical films.

Further, when the (a2) cycloolefin unit of the (A) amorphous polyolefin is a norbornene unit and when the abundance ratio of meso forms and racemo forms in two-unit chain portions (dyads) in the (A) amorphous polyolefin is

[meso form]/[racemo form]>4, the melt-extrusion film of this invention is preferably used as a raw film for a retardation film.

Stretched film

The melt-extrusion film of this invention gives a stretched film by its orientation-stretching.

The stretching method for producing the stretched film of this invention can be selected from known methods such as a longitudinal-monoaxially stretching method in which the stretching is carried out between rolls, a transverse-monoaxially stretching method in which a tenter is used, a simultaneous-biaxially stretching method in which these are used in combination, a consecutive-biaxially stretching method. An optimum stretching method can be selected depending upon its purpose. In view of productivity, further, the stretching is preferably carried out continuously, while it may be carried out by a batch method, and there is no special limitation to impose. The stretching temperature relative to the glass transition temperature (Tg) of the (A) amorphous polyolefin is preferably in the range of (Tg-20)°C to (Tg+30)°C, more preferably in the range of (Tg-10°C) to (Tg+20°C). The stretch ratio is determined depending upon an intended film thickness, and when the stretched film is used as a retardation film, it is determined depending upon an intended retardation value, etc., while each of the longitudinal and transverse stretch ratios is preferably from 1.05 to 4, more preferably from 1.1 to 3.

Retardation film

When the (a2) cycloolefin unit of the (A) amorphous polyolefin used for the melt-extrusion film of this invention is a norbornene unit and when the abundance ratio of meso forms and racemo forms in two-unit chain portions (dyads) in the (A) amorphous polyolefin is [meso form]/[racemo form]>4, the above stretched film can be suitably used as a retardation film for a liquid crystal display. The abundance ratio of the meso forms and racemo forms is more preferably [meso form]/[racemo form]>6.

Preferred embodiments of the above retardation film include, as one embodiment, a retardation film having a retardation R(550), which is a retardation in a film plane at a wavelength of 550 nm, in the range of the following expression (1),

$$100\ nm < R(550) < 800\ nm \qquad (1)$$

and having a thickness of 10 to 150 μm. The retardation as used herein is defined by the following expression (2) and refers to a characteristic that represents a retardation of phase of light that is transmitted in the direction perpendicular to a film.

$$R = (n_x - n_y) \times d \qquad (2)$$

In the above expression (2), $n_x$ is a refractive index of a slow axis (axis in the direction of which the refractive index is the highest), $n_y$ is a refractive index in the direction perpendicular to $n_x$ in a film plane and d is a film thickness.

R(550) is preferably over 100 nm but not more than 600 nm, more preferably 120 to 600 nm. Further, the thickness is preferably 20 to 120 μm, more preferably 20 to 80 μm. The above retardation film can be produced by monoaxial stretching or biaxial stretching, and can be suitably used as a 1/4λ plate, a 1/2λ plate, a λ plate, etc.

Preferred retardation films also include, as another embodiment, a retardation film having a retardation R(550) which is a retardation in a film plane at a wavelength of 550 nm and a retardation K(550) in the film thickness direction, in the ranges of the following expressions (3) and (4),

$$0\ nm < R(550) < 100\ nm \qquad (3)$$

$$50\ nm < K(550) < 400\ nm \qquad (4)$$

and having a thickness of 10 to 150 μm.

In the above expression, K(550) refers to a retardation value in the film thickness direction at a wavelength of 550 nm and is defined by the following expression (5).

$$K = \{(n_x + n_y)/2 - n_z\} \times d \qquad (5)$$

In the above expression (5), $n_x$ and $n_y$ are refractive indices in x-axis and y-axis directions in a film plane, $n_z$ is a refractive index in the thickness direction perpendicular to the x-axis or y-axis and d is a film thickness.

The retardation R is as defined above. R(550) is preferably 10 to 80 nm, more preferably 30 to 80 nm. K(550) is preferably 80 to 250 nm. The film thickness is preferably 30 to 100 μm, more preferably 30 to 85 μm. The above retardation film can be produced by biaxial stretching, and it has birefringence in the film thickness direction and in particular is suitably used for the optical compensation of a vertical alignment (VA) mode.

The liquid crystal display into which the above retardation film can be incorporated includes, for example, various displays such as TN type, STN type, TFT type, transmission type, reflection type, semi-transmission type, etc., and the mode thereof also includes various modes such as TN mode, vertical alignment (VA) mode, OCB mode, IPS mode or the like. In the retardation film for use in a liquid crystal display, the properties that it is required to have differ in various ways depending upon kinds of liquid crystals and modes, and it is required to select an optimum retardation film for every liquid crystal display. Since, however, the melt-extrusion film of this invention satisfies the above requirements and is hence capable of accomplishing the development of excellent birefringence, it has an advantage that it can provide retardation films having various properties in the form of films having a small thickness each.

Generally, as a constitution for optical compensation in the vertical alignment mode for a large liquid crystal display of a television set, etc., there is a two-film constitution in which a liquid crystal cell is sandwiched between optical compensation films and a one-film constitution in which an optical compensation film is used on one surface of a liquid crystal cell. Retardation films for use in the two-film constitution are preferably those which satisfy 30 nm<R(550)<80 nm and 80 nm<K(550)<150 nm and have a thickness in the range of 30 to 85 μm each. Further, when used in the one-film constitution, a retardation film preferably satisfies 30 nm<R(550)<80 nm and 150 nm<K(550)<250 nm and has a thickness in the range of 30 to 85 μm. Since a retardation film formed of the stretched film of this invention is excellent in the development of birefringence, it can be also suitably used as a retardation film of a one-film constitution that requires a high K value. In a vertical alignment mode liquid crystal display into which these retardation films are incorporated, not only frontally-viewed but also obliquely-viewed contrasts and color tones are excellent, and a wide viewing angle can be attained.

## Effect of the Invention

According to this invention, there can be obtained a melt-extrusion film of a vinyl polymerization type amorphous polyolefin which film has gelling inhibited and has remarkably excellent surface nature. Further, a stretched film obtained by orientation-stretching a melt-extrusion film of the specified amorphous polyolefin which film is excellent in the development of birefringence can be suitably used as a thin retardation film. This retardation film has high humidity resistance and excellent dimensional stability, and when incorporated into a liquid crystal display by a known method, it effectively produces excellent effects on an improvement in a viewing angle, an improvement in contrast and improvements in the display quality of a liquid crystal such as color compensation, etc.

## Examples

This invention will be explained more in detail with reference to Examples hereinafter, while this invention shall not be limited to only these Examples. Measurements of physical properties in Examples and Comparative Examples were made by the following methods.

(1) Glass transition temperature (Tg): Measured at a temperature elevation rate of 20°C/minute with a 2920 model DSC apparatus supplied by TA Instruments and an inflection point was determined.

(2) Molecular weight of copolymer: A reduced viscosity $\eta_{sp}/c$ (dL/g) in a cyclohexane solution having a concentration of 1.2 g/dL was measured at 30°C.

(3) $^{13}$C-NMR measurement of copolymer: A JNM-α400 model NMR apparatus supplied by JEOL Ltd. A polymer was dissolved in an orthodichlorobenzene-$d_4$ solvent and measured at a temperature of 100°C. Tetramethylsilane was used as a chemical shift standard. For quantitative determination, 150 MHZ $^{13}$C-NMR spectrum was measured in a reverse gated decoupling mode.

(4) Total light transmittance and haze value of film: Measurements were made with a haze meter NDH-2000 model supplied by Nippon Denshoku Kogyo K.K.

(5) In-plane retardation value R of film and retardation value K of film in film thickness direction: Measurements were made at a light wavelength of 550 nm with a spectroscopic ellipsometer M220 supplied by JASCO Corporation. The in-plane retardation value R was a value that was measured in a state where incidence light was perpendicular to the surface of a film. The retardation value K was determined by changing an angle between incidence light and the surface of a film little by little, measuring retardation values at the thus-changed angles, conducting curve fitting according to the expression of a known index ellipsoid thereby to determine $n_x$, $n_y$ and $n_z$ and substituting them in the following expression.

$$K = \{(n_x + n_y)/2 - n_z\} \times d$$

In this case, an average refractive index of the film is required. The average refractive index of the film was separately measured with an Abbe's refractometer (trade name: "Abbe's refractometer 2-TERT" supplied by ATAGO CO., LTD.).

(6) Film thickness: Measured with an electronic micro film thickness meter supplied by Anritsu Corporation.

(7) Photoelastic constant of film: Measured with a spectroscopic ellipsometer M220 supplied by JASCO Corporation. The photoelastic constant was calculated from a change in retardation value when a stress was applied to a film at a measurement wavelength of 550 nm.

(8) Number of gels in film: Determined by dissolving 10 g of a film in 80 g of cyclohexane at a temperature of 25°C over 24 hours, filtering the cyclohexane solution through a silk screen as a filter, which was formed of a polyester fiber and had openings of 20 μm or 5 μm, fully washing the filter with cyclohexane, then observing undissolved substances on the filter sandwiched with slide glass pieces through a microscope while a black light was applied, and counting particles that emitted fluorescent light.

Those (A) Amorphous polyolefins which were used in Examples and Comparative Examples are as follows.

TOPAS6013 (supplied by TICONA GmbH): An ethylene/norbornene copolymer (Tg = 140°C) synthesized in the presence of a metallocene catalyst. By its $^{13}C$-NMR measurement, it was found that the abundance ratio (molar fraction) of NN dyads to its total norbornene unit content was 0.40 and that the abundance ratio of meso forms and racemo forms in the dyads was [meso form]/[racemo form] = 0.36/0.04 = 9. Further, it was found that the ratio of (a1) ethylene units and (a2) cycloolefin (norbornene) units was 50/50 by molar ratio. Its molecular weight was found to be 0.80 dL/g as a reduced viscosity $\eta_{sc}/c$.

TOPAS5013 (supplied by TICONA GmbH): An ethylene/norbornene copolymer (Tg = 140°C) synthesized in the presence of a metallocene catalyst. By its $^{13}C$-NMR measurement, it was found that the abundance ratio (molar fraction) of NN dyads to its total norbornene unit content was 0.46 and that the abundance ratio of meso forms and racemo forms in the dyads was [meso form]/[racemo form] = 0.05/0.41 = 0.12. Further, it was found that the ratio of (a1) ethylene units and (a2) cycloolefin (norbornene) units was 50/50 by molar ratio. Its molecular weight was found to be 0.66 dL/g as a reduced viscosity $\eta_{sc}/c$.

APEL (supplied by Mitsui Chemicals, Inc.): An ethylene/tetracyclo[4.4.0.$1^{2,5}$.$1^{7,10}$] -3-dodecene copolymer. By its $^{13}C$-NMR measurement, it was found that the ratio of (a1) ethylene units and (a2) cycloolefin units was [(a1)]/[(a2)] = 67/33 by molar ratio. Its molecular weight was found to be 0.84 dL/g as a reduced viscosity $\eta_{sc}/c$.

Example 1

Pellets of TOPAS6013 were dried at 100°C for 4 hours, then, 0.1 part by weight of a tris(2,4-di-tert-butylphenyl) phosphite powder was added to 100 parts by weight of the above pellets and they were dry-blended. This dry blend was melt-extruded through a T-die with a single-screw extruder having a diameter of 30 mm and with a powder-sintered filter having a nominal diameter 20 μm at a resin temperature of 270°C, and an extrudate was continuously taken up through a cooling drum at a film-forming rate of 2.5 m/minute to obtain a melt-extrusion film having a width of 320 mm. This film was excellent in transparency, and when its appearance was observed, an orange peel surface, a foreign matter, etc., were not observed, so that it was also excellent in surface nature and homogeneity. It had an average thickness of 160 μm. It had a Tg of 138°C, a total light transmittance of 91.3 % and a haze of 0.2 %. When measured for a photoelastic constant, this film gave $-6.1 \times 10^{-12}$ $Pa^{-1}$. This film was dissolved in cyclohexane and gels that had been present in the film were counted. When a silk screen having openings of 20 μm was used, the number of gels was 65 pieces/g, and when a silk screen having openings of 5 μm, it was 374 pieces/g. Further, after the film was dissolved in cyclohexane, the resin was re-precipitated in methanol, a filtrate was concentrated to extract the additive, and $^{31}P$-NMR analysis was carried out. In this case, it was found that the content of a phosphite ester (tris(2,4-di-tert-butylphenyl) phosphite) was

0.055 % by weight and that the content of phosphate ester (tris(2,4-di-tert-butylphenyl) phosphate) was 0.041 % by weight. None of a hydrolysis product of phosphite ester and a hydrolysis product of phosphate ester was observed. Table 1 shows the evaluation results.

Example 2

The melt-extrusion and film formation in Example 1 were carried out in the same manner as in Example 1 except that the amount of tris(2,4-di-tert-butylphenyl) phosphite was changed from 0.1 part by weight to 0.2 part by weight, whereby a melt-extrusion film excellent in surface nature and homogeneity was obtained. The additive was also similarly analyzed. Table 1 shows properties of the film.

Example 3

The dry-blending in Example 1 was carried out in the same manner as in Example 1 except that the tris(2,4-di-tert-butylphenyl) phosphite was replaced with 0.05 part by weight of a tris(2,4-di-tert-butylphenyl) phosphite powder and 0.05 part by weight of a stearic acid monoglyceride powder. Further, the thus-obtained dry blend was subjected to melting and film formation in the same manner as in Example 1 except that the film-forming rate was changed to 3.5 m/minute, whereby a melt-extrusion film excellent in surface nature and homogeneity was obtained. Table 1 shows properties of the film. In addition, the content of stearic acid monoglyceride in the film was shown in the column of fatty acid ester.

Example 4

99 Parts by weight of pellets of TOPAS5013 and 1 part by weight of tris(2,4-di-tert-butylphenyl) phosphite were melt-kneaded in a twin-screw extruder having a diameter of 30 mm, to prepare master pellets having an additive content of 1 % by weight, and further, the master pellets were dried at 100°C for 4 hours.
Separately, pellets of TOPAS5013 were dried at 100°C for 4 hours.
10 Parts by weight of the dried master pellets, 90 parts by weight of the dried pellets of TOPAS5013 and 0.1 part by weight stearic acid monoglyceride were dry-blended to obtain a resin composition. The resin composition was subjected to melt-extrusion and film formation in the same manner as in Example 1, whereby a melt-extrusion film excellent in surface nature and homogeneity was obtained. The film had a photoelastic constant of $-9.3 \times 10^{-12}$ $Pa^{-1}$. Table 1 shows properties of the film.

Example 5

The melt-extrusion and film formation in Example 1 were carried out in the same manner as in Example 1 except that TOPAS6013 was replaced with APEL, whereby a melt-extrusion film excellent in surface nature and homogeneity was obtained. The film had a photoelastic constant of $-7.5 \times 10^{-12}$ $Pa^{-1}$. Table 1 shows properties of the film.

Example 6

To 100 parts by weight of TOPAS6013 was added 0.1 part by weight of a 6-[3-(3-tert-butyl-4-hydroxy-5-methylphenyl)propoxy]-2,4,8,10-tetrakis-tert-butyldibenzo[d,f][1.3.2]dioxaphosphepine powder (SUMILIZER GP, supplied by Sumitomo Chemical Co., Ltd.), and they were dry-blended.
This dry blend was melt-extruded through a T-die with a single-screw extruder having a diameter of 30 mm and with a powder-sintered filter having a nominal diameter 20 μm at a resin temperature of 280°C, and an extrudate was continuously taken up through a cooling drum at a film-forming rate of 2.5 m/minute to obtain a melt-extrusion film having a width of 315 mm. This film was excellent in transparency, and when its appearance was observed, an orange peel surface, a foreign matter, etc., were not observed, so that it was also excellent in surface nature and homogeneity. It had an average thickness of 165 μm. It had a Tg of 137°C, a total light transmittance of 91.7 % and a haze of 0.3 %. When measured for a photoelastic constant, this film gave $-6.1 \times 10^{-12}$ $Pa^{-1}$. This film was dissolved in cyclohexane and gels that had been present in the film were counted. When a silk screen having openings of 20 μm was used, the number of gels was 70 pieces/g, and when a silk screen having openings of 5 μm, it was 258 pieces/g.
Further, after the film was dissolved in cyclohexane, the resin was re-precipitated in methanol, a filtrate was concentrated to extract the additive, and $^{31}$P-NMR analysis was carried out. In this case, it was found that the content of a phosphite ester (6-[3-(3-tert-butyl-4-hydroxy-5-methylphenyl)propoxy]-2,4,8,10-tetrakis-tert-butylbenzo[d,f][1.3.2]dioxaphosphepine) was 0.026 % by weight and that the content of phosphate ester that was an oxide of the above phosphite ester was 0.074 % by weight. None of a hydrolysis product of phosphite ester and a hydrolysis product of phosphate ester was observed. Table 1 shows the results.

Example 7

The melt-extrusion and film formation in Example 6 were carried out in the same manner as in Example 6 except that the amount of 6-[3-(3-tert-butyl-4-hydroxy-5-methylphenyl)propoxy]-2,4,8,10-tetrakis-tert-butylbenzo[d,f][1.3.2]dioxaphosphepine was changed from 0.1 part by weight to 0.2 part by weight, whereby a melt-extrusion film excellent in surface nature and homogeneity was obtained. The additive was also similarly analyzed. Table 1 shows properties of the film.

Example 8

The dry blending in Example 6 was carried out in the same manner as in Example 6 except that 0.1 part by weight of the 6-[3-(3-tert-butyl-4-hydroxy-5-methylphenyl)propoxy]-2,4,8,10-tetrakis-tert-butylbenzo[d,f][1.3.2]dioxaphosphepine was replaced with 0.05 part by weight of 6-[3-(3-tert-butyl-4-hydroxy-5-methylphenyl)propoxy]-2,4,8,10-tetrakis-tert-butylbenzo[d,f][1.3.2]dioxaphosphepine and 0.05 part by weight of a stearic acid monoglyceride powder. Further, the thus-obtained dry blend was subjected to melting and film formation in the same manner as in Example 6 except that the film-forming rate was changed to 3.5 m/minute, whereby a melt-extrusion film excellent in surface nature and homogeneity was obtained. Table 1 shows properties of the film.

Example 9

99 Parts by weight of pellets of TOPAS5013 and 1 part by weight of 6-[3-(3-tert-butyl-4-hydroxy-5-methylphenyl)propoxy]-2,4,8,10-tetrakis-tert-butylbenzo[d,f][1.3.2]dioxaphosphepine were melt-kneaded in a twin-screw extruder having a diameter of 30 mm, to prepare master pellets having an additive content of 1 % by weight, and further, the master pellets were dried at 100°C for 4 hours.

Separately, pellets of TOPAS5013 were dried at 100°C for 4 hours.

10 Parts by weight of the dried master pellets, 90 parts by weight of the dried pellets of TOPAS5013 and 0.1 part by weight stearic acid monoglyceride were dry-blended to obtain a resin composition. The resin composition was subjected to melt-extrusion and film formation in the same manner as in Example 6, whereby an extrusion film excellent in surface nature and homogeneity was obtained. The film had a photoelastic constant of -9.3 x $10^{-12}$ $Pa^{-1}$. Table 1 shows properties of the film.

Example 10

Example 6 was repeated except that TOPAS6013 was replaced with APEL, whereby a melt-extrusion film excellent in surface nature and homogeneity was obtained. The film had a photoelastic constant of -7.5 x $10^{-12}$ $Pa^{-1}$. Table 1 shows properties of the film.

Example 11

Pellets of TOPAS6013 were dried at 100°C for 4 hours, then, 0.1 part by weight of a bis(2,4-di-tert-butyl-6-methylphenyl)-ethyl phosphite powder was added to 100 parts by weight of the above pellets, and they were dry-blended.

This dry blend was melt-extruded through a T-die with a single-screw extruder having a diameter of 30 mm and with a powder-sintered filter having a nominal diameter 20 μm at a resin temperature of 280°C, and an extrudate was continuously taken up through a cooling drum at a film-forming rate of 2.5 m/minute to obtain a melt-extrusion film having a width of 315 mm. This film was excellent in transparency, and when its appearance was observed, an orange peel surface, a foreign matter, etc., were not observed, so that it was also excellent in surface nature and homogeneity. It had an average thickness of 175 μm. It had a Tg of 137°C, a total light transmittance of 91.5 % and a haze of 0.2 %. When measured for a photoelastic constant, this film gave -6.1 x $10^{-12}$ $Pa^{-1}$. This film was dissolved in cyclohexane and gels that had been present in the film were counted. When a silk screen having openings of 20 μm was used, the number of gels was 80 pieces/g, and when a silk screen having openings of 5 μm, it was 332 pieces/g.

Further, after the film was dissolved in cyclohexane, the resin was re-precipitated in methanol, a filtrate was concentrated to extract the additive, and $^{31}$P-NMR analysis was carried out. In this case, it was found that the content of a phosphite ester (bis(2,4-di-tert-butyl-6-methylphenyl)-ethyl phosphite) was 0.040 % by weight and that the content of phosphate ester that was an oxide of the above phosphite ester was 0.058 % by weight. None of a hydrolysis product of phosphite ester and a hydrolysis product of phosphate ester was observed. Table 1 shows the results.

Example 12

The melt-extrusion and film formation in Example 11 were carried out in the same manner as in Example 11 except that 0.1 part by weight of the bis(2,4-di-tert-butyl-6-methylphenyl)-ethyl phosphite was replaced with 0.1 part by weight of 2,2'-methylenebis(4,6-di-tert-butylphenyl)-2-ethylhexyl phosphite (ADK STAB HP-10, supplied by ADEKA CORPORATION), whereby a melt-extrusion film excellent in surface nature and homogeneity was obtained. The additive was also similarly analyzed. Table 1 shows properties of the film.

Example 13

The dry blending in Example 11 was carried out in the same manner as in Example 11 except that 0.1 part by weight of the bis(2,4-di-tert-butyl-6-methylphenyl) ethyl phosphite was replaced with 0.05 part by weight of 2,2'-methylenebis(4,6-di-tert-butylphenyl)-2-ethylhexyl phosphite and 0.05 part by weight of a stearic acid monoglyceride powder. Further, the thus-obtained dry blend was subjected to melt-extrusion and film formation in the same manner as in Example 11 except that the film-forming rate was changed to 3.5 m/minute, whereby a melt-extrusion film excellent in surface nature and homogeneity was obtained. Table 1 shows properties of the film.

Example 14

99 Parts by weight of pellets of TOPAS5013 and 1 part by weight of 2,2'-methylenebis(4,6-di-tert-butylphenyl)-2-ethylhexyl phosphite were melt-kneaded in a twin-screw extruder having a diameter of 30 mm, to prepare master pellets having an additive content of 1 % by weight, and further, the master pellets were dried at 100°C for 4 hours.
Separately, pellets of TOPAS5013 were dried at 100°C for 4 hours.
Melt-extrusion and film formation were carried out in the same manner as in Example 11 except for the use of a resin composition obtained by dry-blending 10 parts by weight of the dried master pellets, 90 parts by weight of the dried pellets of TOPAS5013 and 0.1 part by weight stearic acid monoglyceride, whereby a melt-extrusion film excellent in surface nature and homogeneity was obtained. The film had a photoelastic constant of $-9.3 \times 10^{-12}$ $Pa^{-1}$. Table 1 shows properties of the film.

Example 15

Example 12 was repeated except that TOPAS6013 was replaced with APEL, whereby a melt-extrusion film excellent in surface nature and homogeneity was obtained. The film had a photoelastic constant of $-7.5 \times 10^{-12}$ $Pa^{-1}$. Table 1 shows properties of the film.

Example 16

Pellets of TOPAS6013 were dried at 100°C for 4 hours, then, 0.1 part by weight of a powder of a trade name "RIKEMAL S-100A" (main component: stearic acid monoglyceride) supplied by RIKEN VITAMIN CO., LTD. was added to 100 parts by weight of the above pellets, and they were dry-blended. This dry blend was melt-extruded through a T-die with a single-screw extruder having a diameter of 30 mm and with a powder-sintered filter having a nominal diameter 20 μm at a resin temperature of 270°C, and an extrudate was continuously taken up through a cooling drum at a film-forming rate of 2.5 m/minute to obtain a melt-extrusion film having a width of 320 mm. This film was excellent in transparency, and when its appearance was observed, an orange peel surface, a foreign matter, etc., were not observed, so that it was also excellent in surface nature and homogeneity. It had an average thickness of 152 μm. It had a Tg of 137°C, a total light transmittance of 90.8 % and a haze of 0.4 %. When measured for a photoelastic constant, this film gave $-6.1 \times 10^{-12}$ $Pa^{-1}$. This film was dissolved in cyclohexane and gels that had been present in the film were counted. When a silk screen having openings of 20 μm was used, the number of gels was 68 pieces/g, and when a silk screen having openings of 5 μm, it was 713 pieces/g. On the basis of $^1$H-NMR analysis of the film, it was found that the content of stearic acid monoglyceride was 0.087 % by weight. Table 1 shows the results.

Example 17

The melt-extrusion and film formation in Example 16 were carried out in the same manner as in Example 16 except that the amount of RIKEMAL S-100A was changed from 0.1 part by weight to 0.2 part by weight, whereby a melt-extrusion film excellent in surface nature and homogeneity was obtained. Table 1 shows properties of the film.

Example 18

The dry blending in Example 16 was carried out in the same manner as in Example 16 except that RIKEMAL S-100A was replaced with 0.2 part by weight of "RIKEMAL SL-900" (main components: stearyl stearate and stearic acid triglyceride) supplied by RIKEN VITAMIN CO., LTD. Further, the thus-obtained dry blend was subjected to melting and film formation in the same manner as in Example 16 except that the film-forming rate was changed to 3.2 m/minute, whereby a melt-extrusion film excellent in surface nature and homogeneity was obtained. Table 1 shows properties of the film. As an analysis result of contents of stearyl stearate and stearic acid triglyceride in the film, a total content thereof is shown in the column of fatty acid ester.

Example 19

Pellets of TOPAS5013 were dried at 100°C for 4 hours, and then, 0.2 part by weight of a powder of a trade name "REKESTAR EW-400" supplied by RIKEN VITAMIN CO., LTD. (main components: a whole ester from pentaerythritol and higher aliphatic carboxylic acid (stearic acid and palmitic acid) was added to 100 parts by weight of the above pellets to obtain a resin composition and they were dry-blended. The thus-obtained resin composition was subjected to melt-extrusion and film formation in the same manner as in Example 16 except that the film-forming rate was changed to 2.2 m/minute, whereby a film excellent in surface nature and homogeneity was obtained. The film had a photoelastic constant of $-9.3 \times 10^{-12}$ $Pa^{-1}$. Table 1 shows properties of the film.

Example 20

Example 16 was repeated except that TOPAS6013 was replaced with APEL, whereby a film excellent in surface nature and homogeneity was obtained. The film had a photoelastic constant of $-7.5 \times 10^{-12}$ $Pa^{-1}$. Table 1 shows properties of the film.

Example 21

Pellets of TOPAS6013 were dried at 100°C for 4 hours, then, 0.1 part by weight of a cyclic neopentantetraylbis (2,6-di-tert-butyl-4-methylphenyl) phosphite powder (trade name "PEP-36" supplied by ADEKA CORPORATION) was added to 100 parts by weight of the above pellets, and they were dry-blended.

This dry blend was melt-extruded through a T-die with a single-screw extruder having a diameter of 30 mm and with a powder-sintered filter having a nominal diameter 20 μm at a resin temperature of 280°C, and an extrudate was continuously taken up through a cooling drum at a film-forming rate of 2.5 m/minute to obtain a melt-extrusion film having a width of 315 mm. This film was excellent in transparency, and when its appearance was observed, an orange peel surface, a foreign matter, etc., were not observed, so that it was also excellent in surface nature and homogeneity. It had an average thickness of 176 μm. It had a Tg of 137°C, a total light transmittance of 91.8 % and a haze of 0.2 %. When measured for a photoelastic constant, this film gave $-6.1 \times 10^{-12}$ $Pa^{-1}$. This film was dissolved in cyclohexane and gels that had been present in the film were counted. When a silk screen having openings of 20 μm was used, the number of gels was 72 pieces/g, and when a silk screen having openings of 5 μm, it was 314 pieces/g.

Further, after the film was dissolved in cyclohexane, the resin was re-precipitated in methanol, a filtrate was concentrated to extract the additive, and $^{31}$P-NMR analysis was carried out. In this case, it was found that the content of cyclic neopentantetraylbis(2,6-di-tert-butyl-4-methylphenyl) phosphite that was a phosphite ester was 0.036 % by weight and that the content of phosphate ester that was an oxide of the above phosphite ester was 0.063 % by weight. None of a hydrolysis product of phosphite ester and a hydrolysis product of phosphate ester was observed. Table 1 shows the results.

Example 22

The melt-extrusion and film formation in Example 21 were carried out in the same manner as in Example 21 except that the amount of cyclic neopentantetraylbis(2,6-di-tert-butyl-4-methylphenyl) phosphite was changed from 0.1 part by weight to 0.2 part by weight, whereby a melt-extrusion film excellent in surface nature and homogeneity was obtained. The additive was also similarly analyzed. Table 1 shows properties of the film.

Example 23

The dry blending in Example 21 was carried out in the same manner as in Example 21 except that 0.1 part by weight of the cyclic neopentantetraylbis(2,6-di-tert-butyl-4-methylphenyl) phosphite was replaced with 0.05 part by weight

of cyclic neopentantetraylbis(2,4-di-tert-butylphenyl) phosphite (trade name "PEP-24G" supplied by ADEKA CORPORATION) and 0.05 part by weight of a stearic acid monoglyceride powder. Further, the thus-obtained dry blend was subjected to melt-extrusion and film formation in the same manner as in Example 21 except that the film-forming rate was changed to 3.5 m/minute, whereby a melt-extrusion film excellent in surface nature and homogeneity was obtained. Table 1 shows properties of the film.

Example 24

99 Parts by weight of pellets of TOPAS5013 and 1 part by weight of neopentantetraylbis(2,6-di-tert-butyl-4-methylphenyl) phosphite were melt-kneaded in a twin-screw extruder having a diameter of 30 mm, to prepare master pellets having an additive content of 1 % by weight, and further, the master pellets were dried at 100°C for 4 hours.

Separately, pellets of TOPAS5013 were dried at 100°C for 4 hours.

Melt-extrusion and film formation were carried out in the same manner as in Example 21 except for the use of a resin composition obtained by dry-blending 10 parts by weight of the dried master pellets, 90 parts by weight of the dried pellets of TOPAS5013 and 0.1 part by weight stearic acid monoglyceride, whereby a melt-extrusion film excellent in surface nature and homogeneity was obtained. The film had a photoelastic constant of -9.3 x $10^{-12}$ $Pa^{-1}$. Table 1 shows properties of the film.

Example 25

Example 21 was repeated except that TOPAS6013 was replaced with APEL, whereby a film excellent in surface nature and homogeneity was obtained. The film had a photoelastic constant of -7.5 x $10^{-12}$ $Pa^{-1}$. Table 1 shows properties of the film.

Comparative Example 1

The melt-extrusion and film formation in Example 1 were carried out in the same manner as in Example 1 except that the tris(2,4-di-tert-butylphenyl) phosphite was not added. In the thus-obtained film, an orange peel surface and fisheyes were noticeable, and the number of gels was very large. Table 1 shows properties of the film.

Comparative Example 2

The melt-extrusion and film formation in Example 1 were carried out in the same manner as in Example 1 except that 0.1 part by weight of the tris(2,4-di-tert-butylphenyl) phosphite was replaced with 0.2 part by weight of pentaerythritoltetrakis[3-(3,5-di-tert-butyl-4-hydroxypheyl) propionate that was a phenolic antioxidant. In the thus-obtained film, an orange peel surface and fisheyes were noticeable, and the number of gels was very large. Table 1 shows properties of the film.

Comparative Example 3

The melt-extrusion and film formation in Example 1 were carried out in the same manner as in Example 1 except that 0.1 part by weight of the tris(2,4-di-tert-butylphenyl) phosphite was replaced with 0.1 part by weight of n-octadecyl-β-(4'-hydroxy-3',5'-di-tert-butylphenyl) propionate that was a phenolic antioxidant. In the thus-obtained film, an orange peel surface and fisheyes were noticeable, and the number of gels was very large. Table 1 shows properties of the film.

Comparative Example 4

The melt-extrusion and film formation in Example 1 were carried out in the same manner as in Example 1 except that 0.1 part by weight of the tris(2,4-di-tert-butylphenyl) phosphite was replaced with 0.1 part by weight of tetrakis (2,4-di-tert-butylphenyl) 4,4'-biphenylene-di-phosphonite that was a phosphorus-containing antioxidant. In the thus-obtained film, an orange peel surface and fisheyes were noticeable, and the number of gels was very large. Table 1 shows properties of the film.

Comparative Example 5

The melting and film formation in Example 5 were carried out in the same manner as in Example 5 except that the tris(2,4-di-tert-butylphenyl) phosphite was not added. In the thus-obtained film, an orange peel surface and a fisheye

were noticeable, and the number of gels was very large. Table 1 shows properties of the film.

In Table 1, abbreviations for (B) components are as follows. While additives used in Comparative Examples are not included in the (B) component for use in this invention, they are listed in the column of (B) component for convenience.

B1-1: tris(2,4-di-tert-butylphenyl) phosphite

B1-2: bis(2,4-di-tert-butyl-6-methylphenyl)-ethyl phosphite

B2-1: 6-[3-(3-tert-butyl-4-hydroxy-5-methylphenyl)propoxy]-2,4,8,10-tetrakis-tert-butyldibenzo[d,f][1.3.2]dioxaphosphepine (trade name "SUMILIZER GP", supplied by Sumitomo Chemical Co., Ltd.)

B2-2: 2,2'-methylenebis(4,6-di-tert-butylphenyl)-2-ethylhexyl phosphite (trade name "ADK STAB HP-10", supplied by ADEKA CORPORATION)

B3-1: Stearic acid monoglyceride

B3-2: RIKEMAL SL-900 (trade name, supplied by RIKEN VITAMIN CO., LTD., main components: stearyl stearate and stearic acid triglyceride)

B3-3: RIKESTER EW-400 (trade name, supplied by RIKEN VITAMIN CO., LTD., main components: whole ester from pentaerythritol and higher aliphatic carboxylic acid (stearic acid and palmitic acid)

B6-1: cyclic neopentantetraylbis(2,6-di-tert-butyl-4-methylphenyl) phosphite (trade name "PEP-36" supplied by ADEKA CORPORATION)

B6-2: cyclic neopentantetraylbis(2,4-di-tert-butylphenyl) phosphite (trade name "PEP-24G" supplied by ADEKA CORPORATION)

(Phenolic-1): pentaerythritol tetrakis[3-(3,5-di-tert-butyl-4-hydroxyphenyl) propionate]

(Phenolic-2): n-octadecyl-β-(4'-hydroxy-3',5'-di-tert-butylphenyl) propionate

(Phosphorus-containing-1): Tetrakis(2,4-di-tert-butylphenyl) 4,4'-biphenylene-di-phosphonite

Table 1

| | Resin composition | | Film properties | | | | Component contents in film | | |
|---|---|---|---|---|---|---|---|---|---|
| | (A) Polyolefin | (B) component | Thickness (μm) | Total light transmittance (%) | Haze (%) | Number of gels (20μm or more) (pieces/g) | Phosphite ester (wt.%) | Phosphate Ester (wt.%) | Fatty acid ester (wt.%) |
| Example 1 | TOPAS6013 | B1-1 | 160 | 91.3 | 0.2 | 65 | 0.055 | 0.041 | - |
| Example 2 | TOPAS6013 | B1-1 | 155 | 91.8 | 0.3 | 48 | 0.138 | 0.059 | - |
| Example 3 | TOPAS6013 | B1-1/B3-1 | 115 | 91.5 | 0.4 | 43 | 0.027 | 0.017 | 0.042 |
| Example 4 | TOPAS5013 | B1-1/B3-1 | 157 | 91.7 | 0.3 | 70 | 0.046 | 0.052 | 0.095 |
| Example 5 | APEL | B1-1 | 163 | 91.0 | 0.5 | 73 | 0.063 | 0.033 | - |
| Example 6 | TOPAS6013 | B2-1 | 165 | 91.7 | 0.3 | 70 | 0.026 | 0.074 | - |
| Example 7 | TOPAS6013 | B2-1 | 153 | 91.8 | 0.3 | 40 | 0.127 | 0.063 | - |
| Example 8 | TOPAS6013 | B2-1/B3-1 | 110 | 91.5 | 0.3 | 38 | 0.025 | 0.022 | 0.045 |
| Example 9 | TOPAS5013 | B2-1 | 153 | 91.1 | 0.6 | 63 | 0.020 | 0.078 | 0.098 |
| Example 10 | APEL | B2-1 | 160 | 91.5 | 0.4 | 62 | 0.031 | 0.066 | - |
| Example 11 | TOPAS6013 | B1-2 | 175 | 91.5 | 0.2 | 80 | 0.040 | 0.058 | - |
| Example 12 | TOPAS6013 | B2-2 | 178 | 91.7 | 0.1 | 67 | 0.031 | 0.065 | - |
| Example 13 | TOPAS6013 | B2-2/B3-1 | 120 | 91.4 | 0.2 | 73 | 0.017 | 0.028 | 0.042 |
| Example 14 | TOPAS5013 | B2-2 | 165 | 91.2 | 0.2 | 92 | 0.022 | 0.074 | 0.093 |
| Example 15 | APEL | B2-2 | 163 | 91.5 | 0.2 | 88 | 0.037 | 0.060 | - |
| Example 16 | TOPAS6013 | B3-1 | 152 | 90.8 | 0.4 | 68 | - | - | 0.087 |
| Example 17 | TOPAS6013 | B3-1 | 130 | 90.5 | 0.5 | 46 | - | - | 0.17 |
| Example 18 | TOPAS6013 | B3-2 | 102 | 91.6 | 0.3 | 51 | - | - | 0.18 |
| Example 19 | TOPAS5013 | B3-3 | 150 | 91.2 | 0.4 | 63 | - | - | 0.18 |
| Example 20 | APEL | B3-1 | 157 | 90.8 | 0.3 | 77 | - | - | 0.092 |
| Example 21 | TOPAS6013 | B6-1 | 176 | 91.8 | 0.2 | 72 | 0.036 | 0.063 | - |
| Example 22 | TOPAS6013 | B6-1 | 170 | 91.3 | 0.2 | 55 | 0.127 | 0.063 | - |

(continued)

| | Resin composition | | Film properties | | | | Component contents in film | | |
|---|---|---|---|---|---|---|---|---|---|
| | (A) Polyolefin | (B) component | Thickness (μm) | Total light transmittance (%) | Haze (%) | Number of gels (20μm or more) (pieces/g) | Phosphite ester (wt.%) | Phosphate Ester (wt.%) | Fatty acid ester (wt.%) |
| Example 23 | TOPAS6013 | B6-2/B3-1 | 123 | 91.6 | 0.1 | 50 | 0.020 | 0.025 | 0.045 |
| Example 24 | TOPAS5013 | B6-1 | 162 | 91.0 | 0.4 | 59 | 0.026 | 0.072 | 0.096 |
| Example 25 | APEL | B6-1 | 165 | 91.4 | 0.2 | 75 | 0.017 | 0.082 | - |
| Comparative Example 1 | TOPAS6013 | Nil | 188 | 91.5 | 2.8 | Over 1000 | - | - | - |
| Comparative Example 2 | TOPAS6013 | (Phenolic-1) | 173 | 92.0 | 3.5 | Over 1000 | - | - | - |
| Comparative Example 3 | TOPAS6013 | (Phenolic-2) | 185 | 91.8 | 3.2 | Over 1000 | - | - | - |
| Comparative Example 4 | TOPAS6013 | (Phosphorus-containing-1) | 175 | 91.2 | 2.6 | Over 1000 | - | - | - |
| Comparative Example 5 | APEL | Nil | 178 | 91.4 | 2.8 | Over 1000 | - | - | - |

Example 26

The melt-extrusion film (unstretched film) obtained in Example 3 was transversely stretched with a tenter transverse stretching machine having three zones of a pre-heating zone, a stretching zone and a fixing-cooling zone and having a total length of 15 m. It was stretched 2.7 times as wide at a speed of 5 m/minute at a temperature of 145°C and a transverse-monoaxially oriented film was taken up. Table 2 shows the properties of the film. A stretched film having a slow axis in the film width direction, which was suitable for use as an about λ/4 retardation film, was obtained.

Example 27

The melt-extrusion film (a roll of an unstretched film) obtained in Example 1 was subjected to a longitudinal stretching machine that had a zone length of 7 m and that was for stretching a film between roll nips in a drying furnace, and it was longitudinally stretched 1.5 times as long at a feed side speed of 3.4 m/minute at a temperature of 140°C. It was thereafter subjected to the transverse stretching machine used in Example 26 and transversely stretched 2.0 times as wide at a temperature of 145°C to give a biaxially oriented film. Table 2 shows the properties of the film. A film having a slow axis in the film width direction, which was suitable for use as a retardation film for a large VA mode of a two-film constitution, was obtained. In addition, when gels in this orientation-stretched film were counted in the same manner as in Example 1, the number of gels of 20 μm or larger was 60 pieces/g, and the number of gels of 5 μm or larger was 387 pieces/g.

Example 28

A roll of a film having a width of 320 mm and an average thickness of 200 μm was obtained in the same manner as in Example 1 except that the film-forming rate in the melt-extrusion in Example 1 was changed to 2.0 m/minute. The thus-obtained film was excellent in transparency and was also excellent in surface nature and homogeneity. This film was continuously passed through the longitudinal and transverse stretching machines used in Example 27 at a feeding rate of 2.5 m/minute on the longitudinal stretching machine side, to give a biaxially oriented film. Table 2 shows the stretching conditions and film properties. A film having a slow axis in the film width direction, which was suitable for use as a retardation film for a large VA mode of a single-film constitution, was obtained.

Example 29

The film obtained in Example 4 was biaxially stretched in the longitudinal and transverse directions in the same manner as in Example 27. Table 2 shows the results.

Example 30

The film obtained in Example 5 was biaxially stretched in the longitudinal and transverse directions in the same manner as in Example 27. Table 2 shows the results.

Example 31

The melt-extrusion film (a roll of an unstretched film) obtained in Example 8 was transversely stretched with a tenter transverse stretching machine having three zones of a pre-heating zone, a stretching zone and a fixing-cooling zone and having a total length of 15 m. It was stretched 2.7 times as wide at a speed of 5 m/minute at a temperature of 145°C and a transverse-monoaxially oriented film was taken up. Table 2 shows the properties of the film. A stretched film having a slow axis in the film width direction, which was suitable for use as an about λ/4 retardation film, was obtained.

Example 32

The melt-extrusion film (a roll of an unstretched film) obtained in Example 6 was subjected to a longitudinal stretching machine that had a zone length of 7 m and that was for stretching a film between roll nips in a drying furnace, and it was longitudinally stretched 1.5 times as long at a feed side speed of 3.4 m/minute at a temperature of 140°C. It was thereafter subjected to the transverse stretching machine used in Example 31 and transversely stretched 2.0 times as wide at a temperature of 145°C to give a biaxially oriented film. Table 2 shows the properties of the film. A film having a slow axis in the film width direction, which was suitable for use as a retardation film for a large VA mode of a two-film constitution, was obtained.

Example 33

A roll of a film (a roll of an unstretched film) having a width of 315 mm and an average thickness of 205 μm was obtained in the same manner as in Example 6 except that the film-forming rate in the melt-extrusion in Example 6 was changed to 2.0 m/minute. The thus-obtained film was excellent in transparency and was also excellent in surface nature and homogeneity. This film was continuously passed through the longitudinal and transverse stretching machines used in Example 32 at a feeding rate of 2.5 m/minute on the longitudinal stretching machine side, to give a biaxially oriented film. Table 2 shows the stretching conditions and film properties. A film having a slow axis in the film width direction, which was suitable for use as a retardation film for a large VA mode of a single-film constitution, was obtained.

Example 34

The film obtained in Example 9 was biaxially stretched in the longitudinal and transverse directions in the same manner as in Example 32. Table 2 shows the results.

Example 35

The film obtained in Example 10 was biaxially stretched in the longitudinal and transverse directions in the same manner as in Example 32. Table 2 shows the results.

Example 36

The melt-extrusion film (a roll of an unstretched film) obtained in Example 13 was transversely stretched with a tenter transverse stretching machine having three zones of a pre-heating zone, a stretching zone and a fixing-cooling zone and having a total length of 15 m. It was stretched 2.5 times as wide at a speed of 5 m/minute at a temperature of 145°C and a transverse-monoaxially oriented film was taken up. Table 2 shows the properties of the film. A stretched film having a slow axis in the film width direction, which was suitable for use as an about λ/4 retardation film, was obtained.

Example 37

The melt-extrusion film (a roll of an unstretched film) obtained in Example 12 was subjected to a longitudinal stretching machine that had a zone length of 7 m and that was for stretching a film between roll nips in a drying furnace, and it was longitudinally stretched 1.5 times as long at a feed side speed of 3.4 m/minute at a temperature of 140°C. It was thereafter subjected to the transverse stretching machine used in Example 36 and transversely stretched 2.0 times as wide at a temperature of 146°C to give a biaxially oriented film. Table 2 shows the properties of the film. A film having a slow axis in the film width direction, which was suitable for use as a retardation film for a large VA mode of a two-film constitution, was obtained.

Example 38

A roll of a film having a width of 315 mm and an average thickness of 230 μm was obtained in the same manner as in Example 12 except that the film-forming rate in the melt-extrusion in Example 12 was changed to 2.0 m/minute. The thus-obtained film was excellent in transparency and was also excellent in surface nature and homogeneity. This film was continuously passed through the longitudinal and transverse stretching machines used in Example 37 at a feeding rate of 2.5 m/minute on the longitudinal stretching machine side, to give a biaxially oriented film. Table 2 shows the stretching conditions and film properties. A film having a slow axis in the film width direction, which was suitable for use as a retardation film for a large VA mode of a single-film constitution, was obtained.

Example 39

The film obtained in Example 14 was biaxially stretched in the longitudinal and transverse directions in the same manner as in Example 37. Table 2 shows the results.

Example 40

The film obtained in Example 15 was biaxially stretched in the longitudinal and transverse directions in the same manner as in Example 37. Table 2 shows the results.

Example 41

The unstretched film obtained in Example 18 was transversely stretched with a tenter transverse stretching machine having three zones of a pre-heating zone, a stretching zone and a fixing-cooling zone and having a total length of 15 m. It was stretched 2.7 times as wide at a speed of 5 m/minute at a temperature of 143°C and a transverse-monoaxially oriented film was taken up. Table 2 shows the properties of the film. A stretched film having a slow axis in the film width direction, which was suitable for use as an about λ/4 retardation film, was obtained.

Example 42

The melt-extrusion film (a roll of an unstretched film) obtained in Example 16 was subjected to a longitudinal stretching machine that had a zone length of 7 m and that was for stretching a film between roll nips in a drying furnace, and it was longitudinally stretched 1.5 times as long at a feed side speed of 3.4 m/minute at a temperature of 140°C. It was thereafter subjected to the transverse stretching machine used in Example 41 and transversely stretched 2.0 times as wide at a temperature of 145°C to give a biaxially oriented film. Table 2 shows the properties of the film. A film having a slow axis in the film width direction, which was suitable for use as a retardation film for a large VA mode of a two-film constitution, was obtained.

Example 43

A roll of a film having a width of 320 mm and an average thickness of 210 μm was obtained in the same manner as in Example 16 except that the film-forming rate in the melt-extrusion in Example 16 was changed to 1.8 m/minute. The thus-obtained film was excellent in transparency and was also excellent in surface nature and homogeneity. This film was continuously passed through the longitudinal and transverse stretching machines used in Example 42 at a feeding rate of 2.5 m/minute on the longitudinal stretching machine side, to give a biaxially oriented film. Table 2 shows the stretching conditions and film properties. A film having a slow axis in the film width direction, which was suitable for use as a retardation film for a large VA mode of a single-film constitution, was obtained.

Example 44

The film obtained in Example 19 was biaxially stretched in the longitudinal and transverse directions in the same manner as in Example 42. Table 2 shows the results.

Example 45

The film obtained in Example 20 was biaxially stretched in the longitudinal and transverse directions in the same manner as in Example 42. Table 2 shows the results.

Example 46

The melt-extrusion film (a roll of an unstretched film) obtained in Example 23 was transversely stretched with a tenter transverse stretching machine having three zones of a pre-heating zone, a stretching zone and a fixing-cooling zone and having a total length of 15 m. It was stretched 2.5 times as wide at a speed of 5 m/minute at a temperature of 145°C and a transverse-monoaxially oriented film was taken up. Table 2 shows the properties of the film. A stretched film having a slow axis in the film width direction, which was suitable for use as an about λ/4 retardation film, was obtained.

Example 47

The melt-extrusion film (a roll of an unstretched film) obtained in Example 21 was subjected to a longitudinal stretching machine that had a zone length of 7 m and that was for stretching a film between roll nips in a drying furnace, and it was longitudinally stretched 1.5 times as long at a feed side speed of 3.4 m/minute at a temperature of 140°C. It was thereafter subjected to the transverse stretching machine used in Example 46 and transversely stretched 2.0 times as wide at a temperature of 146°C to give a biaxially oriented film. Table 2 shows the properties of the film. A film having a slow axis in the film width direction, which was suitable for use as a retardation film for a large VA mode of a two-film constitution, was obtained.

Example 48

A roll of a film having a width of 315 mm and an average thickness of 227 μm was obtained in the same manner as in Example 21 except that the film-forming rate in the melt-extrusion in Example 21 was changed to 2.0 m/minute. The thus-obtained film was excellent in transparency and was also excellent in surface nature and homogeneity. This film was continuously passed through the longitudinal and transverse stretching machines used in Example 47 at a feeding rate of 2.5 m/minute on the longitudinal stretching machine side, to give a biaxially oriented film. Table 2 shows the stretching conditions and film properties. A film having a slow axis in the film width direction, which was suitable for use as a retardation film for a large VA mode of a single-film constitution, was obtained.

Example 49

The film obtained in Example 24 was biaxially stretched in the longitudinal and transverse directions in the same manner as in Example 47. Table 2 shows the results.

Example 50

The film obtained in Example 25 was biaxially stretched in the longitudinal and transverse directions in the same manner as in Example 47. Table 2 shows the results.

In Table 2, a slow axis angle means a value determined when the moving direction (length direction) of a film was taken as 0°.

Table 2

| | Stretching conditions | | | | Properties of stretched film | | | |
|---|---|---|---|---|---|---|---|---|
| | Longitudinal stretching | | Transverse stretching | | Thickness (μm) | R(550) | K(550) | Slow axis angle* (°) |
| | Temperature (°C) | Stretch ratio | Temperature (°C) | Stretch ratio | | | | |
| Example 26 | - | - | 145 | 2.7 | 40 | 131 | 100 | 90 |
| Example 27 | 140 | 1.5 | 145 | 2.0 | 68 | 52 | 115 | 88 |
| Example 28 | 140 | 2.0 | 145 | 2.5 | 58 | 64 | 225 | -89 |
| Example 29 | 140 | 1.5 | 145 | 2.0 | 66 | 9 | 20 | 89 |
| Example 30 | 140 | 1.5 | 145 | 2.0 | 71 | 11 | 23 | 90 |
| Example 31 | - | - | 145 | 2.7 | 38 | 125 | 96 | 89 |
| Example 32 | 140 | 1.5 | 145 | 2.0 | 70 | 54 | 120 | 90 |
| Example 33 | 140 | 2.0 | 145 | 2.5 | 63 | 62 | 228 | 90 |
| Example 34 | 140 | 1.5 | 145 | 2.0 | 64 | 9 | 19 | 89 |
| Example 35 | 140 | 1.5 | 145 | 2.0 | 69 | 11 | 22 | 88 |
| Example 36 | - | - | 145 | 2.5 | 39 | 138 | 105 | 90 |
| Example 37 | 140 | 1.5 | 145 | 2.0 | 76 | 55 | 127 | 89 |

(continued)

| | Stretching conditions | | | | Properties of stretched film | | | |
|---|---|---|---|---|---|---|---|---|
| | Longitudinal stretching | | Transverse stretching | | Thickness (μm) | R(550) | K(550) | Slow axis angle* (°) |
| | Temperature (°C) | Stretch ratio | Temperature (°C) | Stretch ratio | | | | |
| Example 38 | 140 | 2.0 | 145 | 2.5 | 74 | 53 | 236 | 90 |
| Example 39 | 140 | 1.5 | 145 | 2.0 | 71 | 12 | 30 | 90 |
| Example 40 | 140 | 1.5 | 145 | 2.0 | 72 | 15 | 35 | 90 |
| Example 41 | - | - | 145 | 2.7 | 35 | 139 | 110 | 88 |
| Example 42 | 140 | 1.5 | 143 | 2.0 | 65 | 50 | 113 | 89 |
| Example 43 | 140 | 2.1 | 145 | 2.5 | 60 | 58 | 214 | 90 |
| Example 44 | 140 | 1.5 | 145 | 2.0 | 63 | 8 | 18 | 89 |
| Example 45 | 140 | 1.5 | 145 | 2.0 | 68 | 10 | 22 | 89 |
| Example 46 | - | - | 145 | 2.5 | 43 | 140 | 102 | 90 |
| Example 47 | 140 | 1.5 | 146 | 2.0 | 75 | 52 | 125 | 89 |
| Example 48 | 140 | 2.0 | 146 | 2.5 | 72 | 57 | 234 | 90 |
| Example 49 | 140 | 1.5 | 146 | 2.0 | 70 | 10 | 20 | 89 |
| Example 50 | 140 | 1.5 | 146 | 2.0 | 73 | 14 | 26 | 91 |
| *) value determined when the moving direction (length direction) of a film was taken as 0°. | | | | | | | | |

Example 51

TOPAS6013 was dried at 105°C for 7 hours, 0.1 % by weight of a tris(2,4-di-tert-butylphenyl) phosphite powder was added and they were dry-blended. This dry blend was melt-extruded with a single screw extruder having a screw diameter of 90 mm, a leaf-disc-shaped filter made of a SUS non-woven fabric having openings of an average of 10 μm and a T-die having a lip width of 1,400 mm to form a film. There were used cooling rolls having a three-roll constitution as shown in Fig. 1 and having a structure in which each roll had a diameter of 360 mm, a roll surface length was 1,800 mm and the surface temperatures of the rolls were uniformly controlled by circulating heating media. The resin extruded from the T-die first came in contact with a first cooling roll, then, came in contact with a second cooling roll and further with a third cooling roll and was then taken up through a take-off roll. In addition, edge pinning was performed at a film-landing point on the first cooling roll by applying a voltage of 4.5 kV on each edge of the film.

The temperatures of the extruder and the die were set at 270°C, the temperature of the first cooling roll was set at 130°C, the temperature of the second cooling roll was set at 125°C, the temperature of the third cooling roll was set at 120°C, and the first cooling roll, the second cooling roll and the third cooling roll were adjusted to ensure $R_1$ = 3.8 m/minute, a roll circumferential speed ratio $R_2/R_1$ of 1.002 and a ratio $R_3/R_2$ of 1.000 in which $R_1$ was a circumferential speed of the first cooling roll, $R_2$ was a circumferential speed of the second cooling roll and $R_3$ was a circumferential speed of the third cooling roll. The number of the screw revolution was set at 20 rpm, the resin was extruded and a film

was consecutively brought into contact with circumferences of the first cooling roll, the second cooling roll and the third cooling roll and taken up through the take-off roll. Both edges of the film were cut off by 100 mm each, and the resultant film was take up together with a polyethylene-based masking film having a thickness of 30 μm to give a roll of a 500 m long film having a width of 1,100 mm and a thickness of approximately 200 μm.

Almost no die streaks, foreign mater or the like were observed on the thus-obtained film, and the film was highly uniform when its appearance was observed. The film had an average thickness of 200 μm, and when it was measured with a contact type continuous thickness meter (film thickness meter KG601 supplied by Anritsu Corporation), it showed a thickness nonuniformity of within ±1.5 μm both in the film width and running directions, so that it was a film having very small nonuniformity in thickness. The film had a Tg of 137°C, a total light transmittance of 91.8 % and a haze of 0.3 %. Further, the film was dissolved in cyclohexane and gels that had been present in the film were counted. When a silk screen having openings of 20 μm was used, the number of gels was 24 pieces/g, and when a silk screen having openings of 5 μm, it was 41 pieces/g. After the film was dissolved in cyclohexane, the resin was re-precipitated in methanol, a filtrate was concentrated to extract the additive, and $^{31}$P-NMR analysis was carried out. In this case, it was found that the content of phosphite ester (= tris(2,4-di-tert-butylphenyl) phosphite) was 0.035 % by weight and that the content of phosphate ester (tris(2,4-di-tert-butylphenyl) phosphate was 0.059 % by weight. None of hydrolysis products of phosphite ester and phosphate ester was observed.

## Claims

1. A melt-extrusion film formed by melt-extruding a resin composition containing (A) 100 parts by weight of an amorphous polyolefin having an ethylene unit of the following formula (a1) and a cycloolefin unit of the following formula (a2) and having a glass transition temperature in the range of 100 to 180°C, and (B) 0.005 to 2 parts by weight of at least one member of the following components (B1) to (B6), the content of 0.005 to 2 parts by weight being a total content of the components (B1) to (B6) contained,
wherein the number of gels having a size of 20 μm or larger in the film is 100 pieces/g or less,

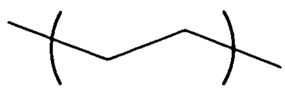
(a1)

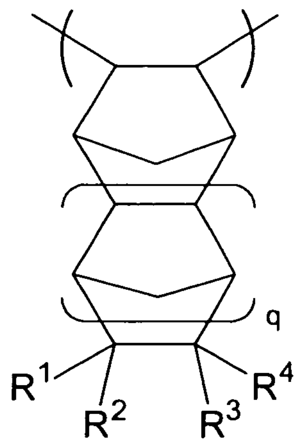
(a2)

wherein q is an integer of 0 to 4, each of $R^1$, $R^2$, $R^3$ and $R^4$ is independently a hydrogen atom, a halogen atom, an aliphatic hydrocarbon group having 1 to 10 carbon atoms or an aromatic hydrocarbon group having 6 to 10 carbon atoms, $R^1$ and $R^2$ may be bonded to each other, or $R^3$ and $R^4$ may be bonded to each other, to form an alkylidene group, $R^1$ and $R^3$ may be combined with carbons to which they are bonded, or $R^2$ and $R^4$ may be combined with carbons to which they are bonded, to form a ring and said ring may have a double bond,

(B1) a compound of the following formula (I),

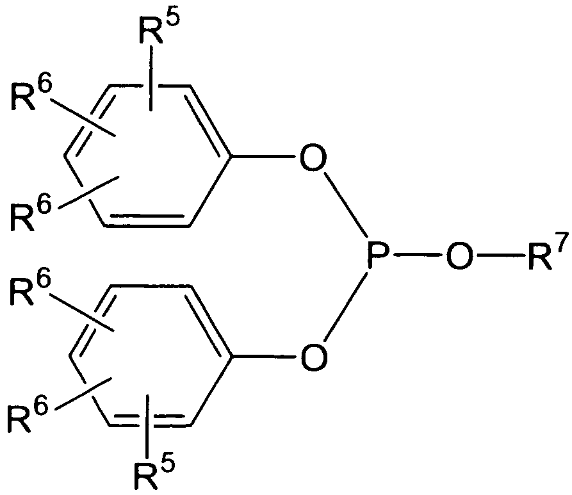

(I)

wherein each of a plurality of $R^5$s and $R^6$s is independently a hydrogen atom, an aliphatic hydrocarbon group having 1 to 12 carbon atoms or an aromatic hydrocarbon group having 6 to 12 carbon atoms and $R^7$ is an aliphatic hydrocarbon group having 1 to 12 carbon atoms or a group of the following formula (1),

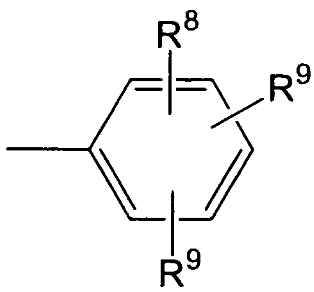

(1)

wherein each of $R^8$ and a plurality of $R^9$s is independently a hydrogen atom, an aliphatic hydrocarbon group having 1 to 12 carbon atoms or an aromatic hydrocarbon group having 6 to 12 carbon atoms,
(B2) a compound of the following formula (II),

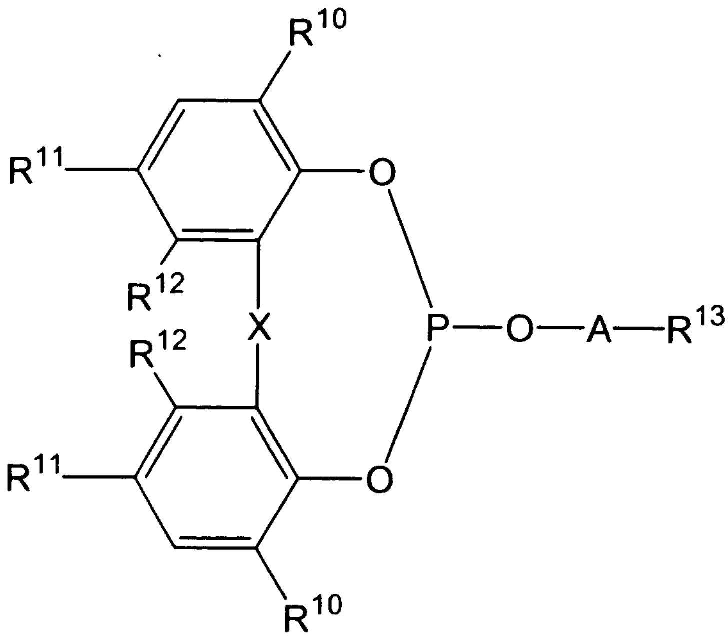

(II)

wherein each of a plurality of $R^{10}$s and $R^{11}$s is independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, each of a plurality of $R^{12}$s is independently a hydrogen atom or an alkyl group having 1 to 8 carbon atoms, X is a single bond, a sulfur atom or a group of -CHR$^{14}$- in which $R^{14}$ is a hydrogen atom, an alkyl group having 1 to 8 carbon atoms or a cycloalkyl group having 5 to 8 carbon atoms, A is a single bond, an alkylene group having 2 to 8 carbon atoms or a group of *-COR$^{15}$- in which $R^{15}$ is a single bond, a methylene group or an alkylene group having 2 to 8 carbon atoms and * represents a bonding to an oxygen side, $R^{13}$ is an aliphatic hydrocarbon group having 1 to 12 carbon atoms or a group of the following formula (2),

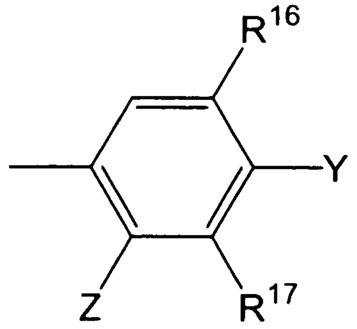

(2)

wherein each of $R^{16}$ and $R^{17}$ is independently a hydrogen atom, an alkyl group having 1 to 8 carbon atoms, a cycloalkyl group having 5 to 8 carbon atoms, an alkylcycloalkyl group having 6 to 12 carbon atoms, an aralkyl group having 7 to 12 carbon atoms or a phenyl group, one of Y and Z is a hydroxyl group, an alkoxy group having 1 to 8 carbon atoms or an aralkyloxy group having 7 to 12 carbon atoms and the other of Y and Z is a hydrogen atom or an alkyl group having 1 to 8 carbon atoms,
(B3) a partially esterified product or wholly esterified product from a monohydric or polyhydric alcohol having 1 to 20 carbon atoms and a fatty acid having 10 to 30 carbon atoms,
(B4) a fatty acid having 10 to 30 carbon atoms,
(B5) a monohydric or polyhydric aliphatic alcohol having 10 to 30 carbon atoms, and
(B6) a compound of the following formula (III),

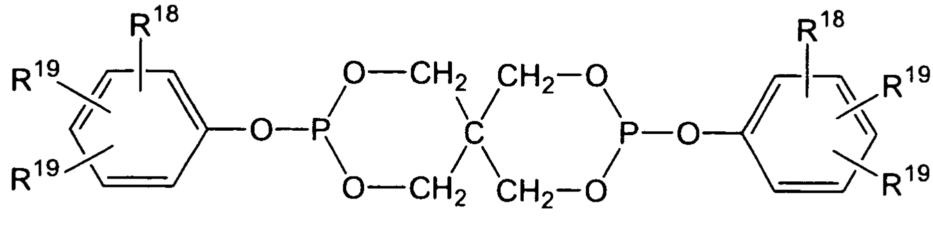

(III)

wherein each of a plurality of $R^{18}$s and $R^{19}$s is independently a hydrogen atom, an aliphatic hydrocarbon group having 1 to 12 carbon atoms or an aromatic hydrocarbon group having 6 to 12 carbon atoms.

**2.** The melt-extrusion film of claim 1, wherein the (B) component contains the component (B1), $R^7$ in the formula (I) is the group of the formula (1), $R^5$ and $R^8$ are hydrogen atoms and each of $R^6$ and $R^9$ is tert-butyl group.

**3.** The melt-extrusion film of claim 2, wherein the (B) component further contains the component (B3).

**4.** The melt-extrusion film of claim 1, wherein the (B) component contains the component (B2), $R^{13}$ in the formula (II) is the group of the formula (2), each of $R^{10}$ and $R^{16}$ is tert-butyl, tert-pentyl, tert-octyl, cyclohexyl or 1-methylcyclohexyl group, $R^{11}$ is methyl, tert-butyl or tert-pentyl group, $R^{12}$ is a hydrogen atom or methyl group, $R^{17}$ is an alkyl group having 1 to 5 carbon atoms, X is a single bond, A is an alkylene group having 2 to 8 carbon atoms and one of Y and Z is hydroxyl group and the other is a hydrogen atom or an alkyl group having 1 to 5 carbon atoms.

**5.** The melt-extrusion film of claim 4, wherein the (B) component further contains the component (B3).

**6.** The melt-extrusion film of claim 1, wherein the (B) component contains at least one of the components (B3) to (B5).

**7.** The melt-extrusion film of claim 1, which has a thickness of 10 to 400 μm.

**8.** A melt-extrusion film containing (A) 100 parts by weight of an amorphous polyolefin having an ethylene unit of the foregoing formula (a1) and a cycloolefin unit of the foregoing formula (a2) and having a glass transition temperature in the range of 100 to 180°C, and (B') 0.005 to 2 parts by weight of at least one member of the following components (B1') to (B6'), the content of 0.005 to 2 parts by weight being a total content of the components (B1') to (B6') contained, wherein the number of gels having a size of 20 μm or larger in the film is 100 pieces/g or less,

(B1') at least one selected from a compound of the foregoing formula (I) and an oxidation product thereof,
(B2') at least one selected from a compound of the foregoing formula (II) and an oxidation product thereof,
(B3') at least one selected from a partially esterified product or wholly esterified product from a monohydric or polyhydric alcohol having 1 to 20 carbon atoms and a fatty acid having 10 to 30 carbon atoms, and a hydrolysis product thereof,
(B4') a fatty acid having 10 to 30 carbon atoms,
(B5') a monohydric or polyhydric aliphatic alcohol having 10 to 30 carbon atoms, and
(B6') at least one selected from a compound of the foregoing formula (III) and an oxidation product thereof.

**9.** A stretched film obtained by orientation-stretching the melt-extrusion film recited in claim 1 or 8.

**10.** The stretched film of claim 9, wherein the (a2) cycloolefin unit of the (A) amorphous polyolefin is a norbornene unit and the abundance ratio of meso forms and racemo forms in two-unit chain portions (dyads) of the (a2) unit in the (A) amorphous polyolefin is [meso form]/[racemo form]>4 and which is used as a retardation film.

Fig. 1

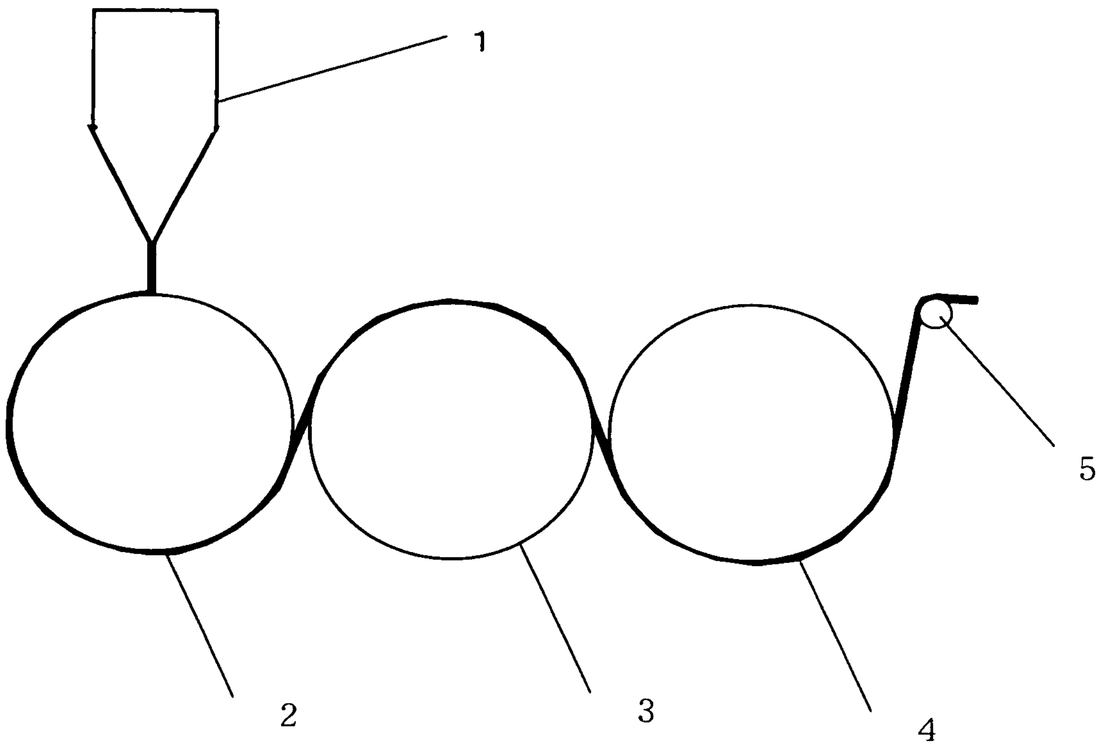

**INTERNATIONAL SEARCH REPORT**

International application No.
PCT/JP2006/320012

A. CLASSIFICATION OF SUBJECT MATTER
*C08J5/18*(2006.01)i, *C08K5/103*(2006.01)i, *C08K5/524*(2006.01)i, *C08K5/527*(2006.01)i, *C08L23/08*(2006.01)i, *C08L45/00*(2006.01)i

According to International Patent Classification (IPC) or to both national classification and IPC

B. FIELDS SEARCHED

Minimum documentation searched (classification system followed by classification symbols)
C08J5/18, C08K5/00-5/59, C08L23/00-23/36, C08L45/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-69248 A (Sumitomo Chemical Co., Ltd.), 08 March, 2002 (08.03.02), Claims; Par. Nos. [0011] to [0014], [0018], [0023] (Family: none) | 1-10 |
| X | JP 2002-69247 A (Sumitomo Chemical Co., Ltd.), 08 March, 2002 (08.03.02), Claims; Par. Nos. [0011] to [0014], [0018], [0022] (Family: none) | 1-10 |
| X<br>Y | JP 2003-253061 A (Sumitomo Chemical Co., Ltd.), 10 September, 2003 (10.09.03), Claims; Par. Nos. [0008], [0034] (Family: none) | 1,2,4,7-10<br>3,5,6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>24 November, 2006 (24.11.06) | Date of mailing of the international search report<br>05 December, 2006 (05.12.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/320012

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2002-234964 A (Ciba Specialty Chemicals Holding Inc.),<br>23 August, 2002 (23.08.02),<br>Claims; Par. Nos. [0011] to [0014], [0065], [0096] to [0097]<br>& US 2002/0120041 A1 & US 2005/0192385 A1<br>& DE 10160602 A1 & GB 2373507 A<br>& GB 2386901 A & FI 20012367 A<br>& NL 1019532 A1 & NO 20016050 A<br>& PT 102702 A & FR 2817873 A1<br>& ZA 200110128 A & SG 91946 A1<br>& AU 9717801 A & BR 106359 A<br>& CN 1358790 A & CA 2364767 A1<br>& MX 1012833 A & SE 104002 A<br>& IT 20012600 A1 & ES 2192135 A1<br>& BE 1014535 A3 | 1,2,4,7-10<br>3,5,6 |
| X<br>Y | JP 2001-181483 A (Nippon Zeon Co., Ltd.),<br>03 July, 2001 (03.07.01),<br>Claims; Par. Nos. [0009] to [0019], [0034] to [0035], [0047]<br>(Family: none) | 1,2,4,7-10<br>3,5,6 |
| Y | JP 6-240059 A (Hoechst AG.),<br>30 August, 1994 (30.08.94),<br>Claims; Par. Nos. [0033], [0044]<br>& EP 599284 A1 & AU 5193993 A<br>& CA 2110100 A1 & CN 1089280 A | 1-10 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3407714 B
- JP 3470567 B
- JP 2003131036 A
- JP 2002113767 A
- JP 2003311813 A
- JP 10273494 A
- JP 2001261943 A
- JP 2004083813 A
- JP 2615957 B
- JP 3082768 B
- JP 7002953 A
- JP 3497894 B

### Non-patent literature cited in the description

- *Macromol. Rapid Commun.,* 1999, vol. 20, 279